# EUROPEAN PATENT APPLICATION

(11) **EP 4 668 827 A1**
(43) Date of publication of application: **24.12.2025**
(21) Application number: 24755919.8
(22) Date of filing: 24.01.2024
(51) Int. Cl.: H04W 24/02

(54) **INFORMATION TRANSMISSION METHOD AND APPARATUS, AND TERMINAL AND NETWORK DEVICE**

(30) Priority: 17.02.2023 CN 202310131355
(71) Applicant: Datang Mobile Communications Equipment Co., Ltd., Beijing 100085 (CN)
(72) Inventor: WANG, Jiaqing, Beijing 100085 (CN); YANG, Meiying, Beijing 100085 (CN); LI, Hui, Beijing 100085 (CN)
(74) Representative: Studio Torta S.p.A.
(86) International application number: PCT/CN2024/073734
(87) International publication number: WO 2024/169544

(57) **Abstract**

The present disclosure relates to the technical field of communications. Provided are an information transmission method and apparatus, and a terminal and a network device. The method is executed by a terminal, and comprises: acquiring antenna configuration information sent by a network device; and measuring and reporting a reference signal resource according to the antenna configuration information.

## Description

### CROSS-REFERENCE TO RELATED APPLICATION

The present disclosure claims priority to Chinese Patent Application No. 202310131355.3, titled "Information Transmission Method, Apparatus, Terminal, and Network Device," filed with the China National Intellectual Property Administration on February 17, 2023, the entire contents of which are incorporated herein by reference.

### TECHNICAL FIELD

The present disclosure relates to the field of communication technologies and particularly to an information transmission method, apparatus, terminal, and network device.

### BACKGROUND

Compared with fourth-generation (4G) mobile communication, the New Radio (NR) system needs to support high-frequency bands, large bandwidth, and massive antenna technology. While improving system performance, the power consumption of fifth-generation (5G) base stations has increased to 2-3 times that of 4G base stations. Energy consumption is a major indicator of operating expenses (OPEX) for operators. According to operator data, the operating cost of energy consumption in mobile networks accounts for 23% of total operating costs, becoming a heavy burden for the widespread deployment of 5G networks. The energy consumption issue also limits its application in vertical industries and the large-scale adoption of 5G terminals. Based on actual measurements, the majority of base station energy consumption originates from the radio access network, particularly the Active Antenna Unit (AAU) part of massive antenna arrays. How to reduce the energy consumption of base stations is an urgent problem to be solved.

### SUMMARY

The present disclosure provides an information transmission method, apparatus, terminal, and network device to reduce the energy consumption of a base station.

To address the abovementioned technical problem, the present disclosure provides an information transmission method, performed by a terminal, including:
acquiring antenna configuration information sent by a network device;
performing reference signal resource measurement and reporting based on the antenna configuration information.

Optionally, the antenna configuration information includes or is associated with at least one of the following:
a set of deactivated antenna ports;
a set of activated antenna ports;
a first dimension and a second dimension of an antenna array;
indication information of an antenna panel;
channel state information (CSI) reporting indication information;
antenna port number information;
an antenna port pattern.

Optionally, the granularity of the set constituted by the antenna configuration information includes at least one of the following:
a single antenna port identifier;
information determined by a function of a single antenna port identifier;
a group of antenna ports.

Optionally, the antenna configuration information satisfies:
antenna array information determined based on the antenna configuration information belongs to a predefined set.

Optionally, the antenna array information includes or is associated with one of the following:
antenna port number information of an antenna array;
a first dimension and a second dimension of an antenna array;
indication information of an antenna panel;
an antenna port pattern.

Optionally, the predefined set satisfies at least one of the following:
the predefined set is associated with a predefined antenna port set;
the predefined set is associated with a first dimension and a second dimension of an antenna array corresponding to antenna ports;
the predefined set is associated with a first dimension and a second dimension of an antenna array corresponding to antenna ports and a number of antenna panels.

Optionally, before the acquiring antenna configuration information sent by a network device, the method further includes:
acquiring at least one reference signal resource configured by the network device through radio resource control (RRC) signaling, where the reference signal resource is associated with at least one antenna configuration information;
the acquiring antenna configuration information sent by a network device includes:
   receiving an antenna configuration indication sent by the network device through dynamic signaling;
   determining the antenna configuration information indicated by the dynamic signaling based on the antenna configuration indication;
   wherein the antenna configuration information indicated by the dynamic signaling is a subset of the at least one antenna configuration information associated with the at least one reference signal resource configured by the RRC signaling, and the subset includes at least one antenna configuration information;
   wherein the reference signal resource includes: a periodic reference signal resource, a semi-persistent reference signal resource, or an aperiodic reference signal resource.

Optionally, in a case where the reference signal resource includes a periodic reference signal resource, the method further includes at least one of the following:
before the terminal receives the antenna configuration information sent by the network device through dynamic signaling, performing measurement and reporting on a preset reference signal resource;
in a case where the terminal receives the antenna configuration information sent by the network device through dynamic signaling, stopping reporting a measurement report of the preset reference signal resource;
in a case where the terminal receives the antenna configuration information sent by the network device through dynamic signaling, reporting a measurement report indicated by the antenna configuration information;
in a case where the terminal receives the antenna configuration information sent by the network device through dynamic signaling, stopping reporting the measurement report indicated by the antenna configuration information;
in a case where the terminal receives the antenna configuration information sent by the network device through dynamic signaling, reducing a reporting priority of a measurement report associated with a reference signal resource linked to deactivated antenna ports indicated by the antenna configuration information;
in a case where the terminal receives the antenna configuration information sent by the network device through dynamic signaling, stopping reporting the measurement report associated with the reference signal resource linked to deactivated antenna ports indicated by the antenna configuration information;
wherein the preset reference signal resource includes: all periodic reference signal resources configured by the network device or a default periodic reference signal resource.

Optionally, the default periodic reference signal resource is specified by a protocol or configured by higher-layer signaling.

Optionally, the reference signal resource associated with the antenna configuration information is quasi-co-located (QCL) with respect to type D.

Optionally, the performing reference signal resource measurement and reporting based on the antenna configuration information includes:
performing measurement on M reference signal resources based on the antenna configuration information and reporting N measurement reports;
wherein M and N are integers greater than or equal to 1, and M is greater than or equal to N.

Optionally, before the performing reference signal resource measurement and reporting based on the antenna configuration information, the method further includes:
receiving a set of measurement result feedback values configured by the network device through higher-layer signaling;
wherein the performing reference signal resource measurement and reporting based on the antenna configuration information includes:
performing reference signal resource measurement based on the antenna configuration information and feeding back a measurement report based on the set of measurement result feedback values;
   or,
before the performing reference signal resource measurement and reporting based on the antenna configuration information, the method further includes:
   acquiring multiple sets of measurement result feedback values specified by a protocol;
   wherein the performing reference signal resource measurement and reporting based on the antenna configuration information includes:
      performing reference signal resource measurement based on the antenna configuration information and, based on the multiple sets of measurement result feedback values, sending to the network device a set identifier of the set of measurement result feedback values used for measurement reporting and a corresponding value of each measurement report within the set of measurement result feedback values;
         or,
      the performing reference signal resource measurement and reporting based on the antenna configuration information includes:
         acquiring a set of measurement result feedback values specified by a protocol, where a minimum value of the set of measurement result feedback values is less than a preset value;
         performing reference signal resource measurement based on the antenna configuration information and feeding back a measurement report based on the set of measurement result feedback values.

The present disclosure further provides an information transmission method, executed by a network device, including:
sending antenna configuration information to a terminal, so that the terminal performs reference signal resource measurement and reporting based on the acquired antenna configuration information.

Optionally, the antenna configuration information includes or is associated with at least one of the following:
a set of deactivated antenna ports;
a set of activated antenna ports;
a first dimension and a second dimension of an antenna array;
indication information of an antenna panel;
channel state information (CSI) reporting indication information;
antenna port number information;
an antenna port pattern.

Optionally, the granularity of the set constituted by the antenna configuration information includes at least one of the following:
a single antenna port identifier;
information determined by a function of a single antenna port identifier;
a group of antenna ports.

Optionally, the antenna configuration information satisfies:
antenna array information determined based on the antenna configuration information belongs to a predefined set.

Optionally, the antenna array information includes or is associated with one of the following:
antenna port number information of an antenna array;
a first dimension and a second dimension of an antenna array;
indication information of an antenna panel;
an antenna port pattern.

Optionally, the predefined set satisfies at least one of the following:
the predefined set is associated with a predefined antenna port set;
the predefined set is associated with a first dimension and a second dimension of an antenna array corresponding to antenna ports;
the predefined set is associated with a first dimension and a second dimension of an antenna array corresponding to antenna ports and a number of antenna panels.

Optionally, the method further includes:
configuring at least one reference signal resource for the terminal through radio resource control (RRC) signaling, where the reference signal resource is associated with at least one antenna configuration information;
the sending antenna configuration information to a terminal includes:
   sending an antenna configuration indication to the terminal through dynamic signaling, so that the terminal determines the antenna configuration information indicated by the dynamic signaling based on the antenna configuration indication;
   wherein the antenna configuration information indicated by the dynamic signaling is a subset of the at least one antenna configuration information associated with the at least one reference signal resource configured by the RRC signaling, and the subset includes at least one antenna configuration information;
   wherein the reference signal resource includes: a periodic reference signal resource, a semi-persistent reference signal resource, or an aperiodic reference signal resource.

Optionally, the reference signal resource associated with the antenna configuration information is quasi-co-located (QCL) with respect to type D.

Optionally, the method further includes:
configuring a set of measurement result feedback values for the terminal through higher-layer signaling.

Optionally, the method further includes:
receiving a set identifier of the set of measurement result feedback values used by the terminal for measurement reporting and a corresponding value of each measurement report within the set of measurement result feedback values.

The present disclosure further provides a terminal, including a memory, a transceiver, and a processor:
the memory is configured to store a computer program; the transceiver is configured to transmit and receive data under the control of the processor; the processor is configured to read the computer program in the memory and execute the following operations:
acquiring antenna configuration information sent by a network device;
performing reference signal resource measurement and reporting based on the antenna configuration information.

Optionally, the processor is configured to read the computer program in the memory and further execute the following operations:
acquiring at least one reference signal resource configured by the network device through radio resource control (RRC) signaling, where the reference signal resource is associated with at least one antenna configuration information;
receiving an antenna configuration indication sent by the network device through dynamic signaling;
determining the antenna configuration information indicated by the dynamic signaling based on the antenna configuration indication;
wherein the antenna configuration information indicated by the dynamic signaling is a subset of the at least one antenna configuration information associated with the at least one reference signal resource configured by the RRC signaling, and the subset includes at least one antenna configuration information;
wherein the reference signal resource includes: a periodic reference signal resource, a semi-persistent reference signal resource, or an aperiodic reference signal resource.

Optionally, in a case where the reference signal resource includes a periodic reference signal resource, the processor is configured to read the computer program in the memory and further execute at least one of the following operations:
before the terminal receives the antenna configuration information sent by the network device through dynamic signaling, performing measurement and reporting on a preset reference signal resource;
in a case where the terminal receives the antenna configuration information sent by the network device through dynamic signaling, stopping reporting a measurement report of the preset reference signal resource;
in a case where the terminal receives the antenna configuration information sent by the network device through dynamic signaling, reporting a measurement report indicated by the antenna configuration information;
in a case where the terminal receives the antenna configuration information sent by the network device through dynamic signaling, stopping reporting the measurement report indicated by the antenna configuration information;
in a case where the terminal receives the antenna configuration information sent by the network device through dynamic signaling, reducing a reporting priority of a measurement report associated with a reference signal resource linked to deactivated antenna ports indicated by the antenna configuration information;
in a case where the terminal receives the antenna configuration information sent by the network device through dynamic signaling, stopping reporting the measurement report associated with the reference signal resource linked to deactivated antenna ports indicated by the antenna configuration information;
wherein the preset reference signal resource includes: all periodic reference signal resources configured by the network device or a default periodic reference signal resource.

Optionally, the processor is configured to read the computer program in the memory and execute the following operations:
performing measurement on M reference signal resources based on the antenna configuration information and reporting N measurement reports;
wherein M and N are integers greater than or equal to 1, and M is greater than or equal to N.

Optionally, the processor is configured to read the computer program in the memory and further execute the following operations:
receiving a set of measurement result feedback values configured by the network device through higher-layer signaling;
performing reference signal resource measurement based on the antenna configuration information and feeding back a measurement report based on the set of measurement result feedback values;
   or,
acquiring multiple sets of measurement result feedback values specified by a protocol;
performing reference signal resource measurement based on the antenna configuration information and, based on the multiple sets of measurement result feedback values, sending to the network device a set identifier of the set of measurement result feedback values used for measurement reporting and a corresponding value of each measurement report within the set of measurement result feedback values;
   or,
acquiring a set of measurement result feedback values specified by a protocol, where a minimum value of the set of measurement result feedback values is less than a preset value;
performing reference signal resource measurement based on the antenna configuration information and feeding back a measurement report based on the set of measurement result feedback values.

The present disclosure further provides a network device, including a memory, a transceiver, and a processor:
the memory is configured to store a computer program; the transceiver is configured to transmit and receive data under the control of the processor; the processor is configured to read the computer program in the memory and execute the following operations:
sending antenna configuration information to a terminal, so that the terminal performs reference signal resource measurement and reporting based on the acquired antenna configuration information.

The present disclosure further provides an information transmission apparatus, applied to a terminal, including:
a first acquisition unit, configured to acquire antenna configuration information sent by a network device;
a measurement and reporting unit, configured to perform reference signal resource measurement and reporting based on the antenna configuration information.

The present disclosure further provides an information transmission apparatus, applied to a network device, including:
a first sending unit, configured to send antenna configuration information to a terminal, so that the terminal performs reference signal resource measurement and reporting based on the acquired antenna configuration information.

The present disclosure further provides a processor-readable storage medium, where the processor-readable storage medium stores a computer program, and the computer program is configured to cause the processor to execute the above methods.

The beneficial effects of the present disclosure are:
In the above solution, by acquiring antenna configuration information sent by a network device and performing reference signal resource measurement and reporting based on the antenna configuration information, the transmission of antenna ports can be adaptively adjusted, thereby reducing the energy consumption of the base station.

### BRIEF DESCRIPTION OF THE DRAWINGS

To more clearly illustrate the technical solutions in the embodiments of the present disclosure or the related art, the accompanying drawings used in the description of the embodiments or the related art will be briefly introduced below. Obviously, the drawings in the following description are merely some embodiments recorded in the present disclosure. For those of ordinary skill in the art, other drawings may be obtained from these accompanying drawings without creative effort.
Figure 1 shows a structural diagram of a network system applicable to an embodiment of the present disclosure;
Figure 2 shows a first schematic diagram of the mapping relationship between 32 CSI-RS antenna ports and an antenna array;
Figure 3 shows a second schematic diagram of the mapping relationship between 32 CSI-RS antenna ports and an antenna array;
Figure 4 shows a first flowchart of the information transmission method according to an embodiment of the present disclosure;
Figure 5 shows a schematic diagram of the mapping relationship between antenna ports and time-frequency resources;
Figure 6 shows a schematic diagram of deactivated antenna ports in an antenna array;
Figure 7 shows a schematic diagram of the mapping relationship between deactivated antenna ports in an antenna array and time-frequency resources;
Figure 8 shows a schematic diagram of antenna port grouping;
Figure 9 shows a second flowchart of the information transmission method according to an embodiment of the present disclosure;
Figure 10 shows a first schematic diagram of the units of the information transmission apparatus according to an embodiment of the present disclosure;
Figure 11 shows a structural diagram of a terminal according to an embodiment of the present disclosure;
Figure 12 shows a second schematic diagram of the units of the information transmission apparatus according to an embodiment of the present disclosure;
Figure 13 shows a structural diagram of a network device according to an embodiment of the present disclosure.

### DETAILED DESCRIPTION

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

The terms "first," "second," and the like in the specification and claims of the present disclosure are used to distinguish similar objects and do not necessarily imply a specific order or sequence. It should be understood that the data used in this way may be interchanged under appropriate circumstances, so that the embodiments of the present disclosure described herein can be implemented in orders other than those illustrated or described. Furthermore, the terms "comprising," "including," "having," and any variations thereof are intended to cover non-exclusive inclusion. For example, a process, method, system, product, or device that includes a series of steps or units is not necessarily limited to those steps or units explicitly listed but may include other steps or units not explicitly listed or inherent to such processes, methods, products, or devices.

The term "and/or" in the embodiments of the present disclosure describes the association relationship of associated objects, indicating that three relationships may exist. For example, "A and/or B" may indicate: A alone, both A and B, or B alone. The character "/" generally indicates an "or" relationship between the associated objects. The term "multiple" in the embodiments of the present disclosure refers to two or more, and other quantifiers are similar.

In the embodiments of the present disclosure, terms such as "exemplary" or "for example" are used to indicate examples, illustrations, or explanations. Any embodiment or design solution described as "exemplary" or "for example" in the embodiments of the present disclosure should not be construed as more preferred or advantageous over other embodiments or design solutions. Rather, the use of terms such as "exemplary" or "for example" is intended to present related concepts in a concrete manner.

The embodiments of the present disclosure will now be described with reference to the accompanying drawings. The information transmission method, apparatus, terminal, and network device provided in the embodiments of the present disclosure may be applied to wireless communication systems. The wireless communication system may be a system adopting fifth-generation (5G) mobile communication technology (hereinafter referred to as a 5G system). Those skilled in the art will understand that the 5G NR system is merely an example and not a limitation.

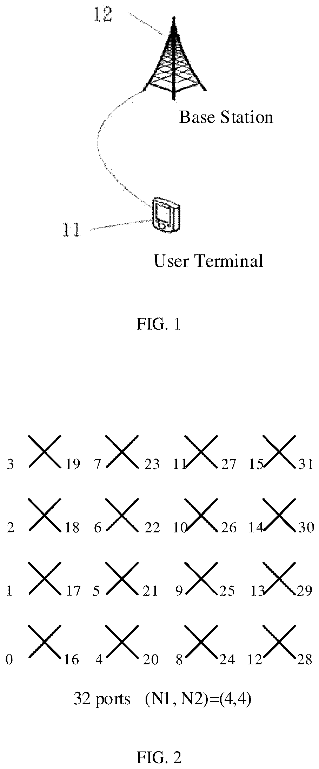

Referring to Figure 1, Figure 1 is a structural diagram of a network system applicable to an embodiment of the present disclosure. As shown in Figure 1, the system includes a user terminal 11 and a base station 12. The user terminal 11 may be user equipment (UE), such as a mobile phone, tablet personal computer (Tablet PC), laptop computer, personal digital assistant (PDA), mobile internet device (MID), or wearable device. It should be noted that the specific type of the user terminal 11 is not limited in the embodiments of the present disclosure. The base station 12 may be a 5G or later-generation base station (e.g., gNB, 5G NR NB) or a base station in other communication systems, also referred to as Node B. It should be noted that while the embodiments of the present disclosure use a 5G base station as an example, the specific type of the base station 12 is not limited.

First, based on the technical solutions provided in the present disclosure, some technical terms that may be involved are introduced.

The base station may consider channel deactivation for multiple antennas, such as antenna ports or certain antenna panels. When certain channels are deactivated, their corresponding antenna ports are deactivated. Compared with 4G base stations, the number of channels in 5G base stations has increased significantly. Channel deactivation can not only reduce power amplifier consumption but also lower the static power consumption of channels. Currently, base station manufacturers have adopted channel deactivation as a mainstream energy-saving solution. Compared to deactivating the base station in the time domain, channel deactivation has clear advantages in ensuring service continuity, and its application scenarios are not limited to light-load conditions for base station services.

The measurement and reporting of channel state information (CSI) are closely related to the CSI framework. The CSI framework includes two parts: resource configuration (Resource Setting) and report configuration (Reporting Setting). Resource configuration is used to configure reference signals for CSI, corresponding to the high-layer signaling CSI-ResourceConfig IE. Each CSI-ResourceConfig includes at least one non-zero power CSI reference signal synchronization signal block (NZP-CSI-RS-SSB) and/or at least one non-zero power CSI reference signal resource set (NZP-CSI-RS-ResourceSet). Each NZP-CSI-RS-ResourceSet contains at least one NZP-CSI-RS-Resource. Reporting Setting is primarily configured through radio resource control (RRC) layer signaling CSI-ReportConfig information element (IE), which defines the behavior of CSI reporting. Each CSI-ReportConfig is associated with one or more resource configurations (CSI-ResourceConfig), indicating the resource configurations used for channel measurement and/or interference measurement. In addition, each CSI-ReportConfig includes: CSI reporting time-domain behavior, such as periodic (Periodic), semi-persistent on PUCCH (semiPersistentOnPUCCH), semi-persistent on PUSCH (semiPersistentOnPUSCH), or aperiodic (Aperiodic) CSI reporting, along with the corresponding reporting period and offset; CSI reporting frequency-domain behavior, such as the granularity of channel quality indicator (CQI) and precoding matrix indicator (PMI), including wideband and subband; measurement restriction configurations, including restrictions for channel measurement and interference measurement; and CSI-related quantities reported by the UE, such as CQI, PMI, CSI-RS resource indicator (CRI), SS/PBCH block resource indicator (SSBRI), layer indicator (LI), rank indicator (RI), layer 1 reference signal received power (L1-RSRP), or layer 1 signal-to-interference-plus-noise ratio (L1-SINR). Additionally, each CSI-ReportConfig includes codebook configurations, such as Type I, Type II, or enhanced Type II codebooks, as well as codebook restriction subsets.

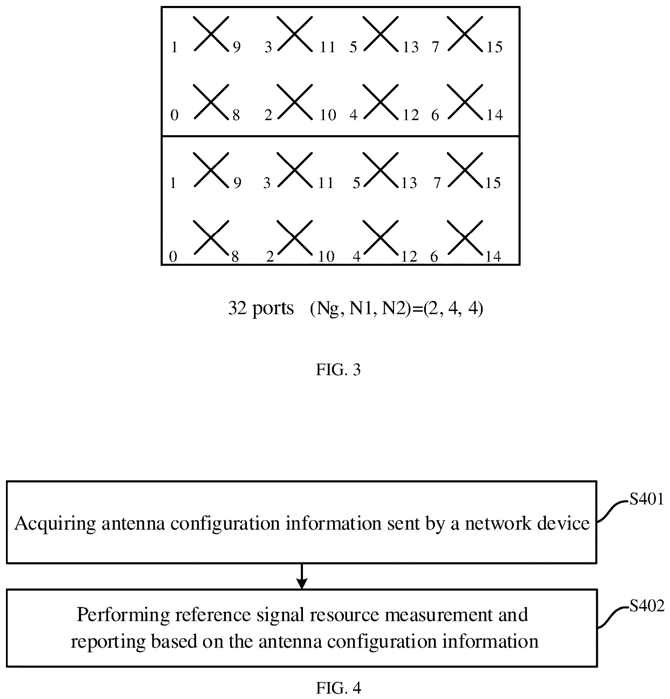

The 3rd Generation Partnership Project (3GPP) New Radio (NR) protocol supports CSI-RS port numbers of 1, 2, 4, 8, 16, 24, and 32. Typically, multiple CSI-RS antenna ports can be mapped to a two-dimensional antenna array. An example of a 32-port configuration is shown in Figures 2 and 3.

In the above antenna port array, the horizontal direction includes N1 dual-polarized antennas, the vertical direction includes N2 dual-polarized antennas, and Ng represents the number of antenna panels/arrays (Panel). Figure 2 illustrates a single antenna panel with 32 antenna ports, while Figure 3 illustrates multiple panels (Multi-Panel) aggregated to form 32 antenna ports.

Based on the analysis, the embodiments of the present disclosure provide an information transmission method, apparatus, terminal, and network device to reduce the energy consumption of base stations.

The method and apparatus are based on the same inventive concept. Since the principles for solving problems are similar, the implementation of the apparatus and method can be cross-referenced, with redundant details omitted.

As shown in Figure 4, an embodiment of the present disclosure provides an information transmission method performed by a terminal, including:
Step S401: acquiring antenna configuration information sent by a network device.
Step S402: performing reference signal resource measurement and reporting based on the antenna configuration information.

It should be noted that by dynamically adjusting the antenna configuration information, real-time adaptive adjustment of antenna configurations can be achieved, thereby adaptively controlling the transmission of antenna ports and reducing the energy consumption of the base station.

It should also be noted that the antenna configuration information may also be referred to as antenna adaptation information, antenna port adaptation information, antenna port adaptation pattern information, antenna port adaptation pattern, antenna port pattern, antenna pattern, antenna port adaptation structure information, or antenna port adaptation availability information. Alternatively, it may be understood that the antenna configuration information includes antenna adaptation information, antenna port adaptation information, antenna port adaptation pattern information, antenna port adaptation pattern, antenna port pattern, antenna pattern, antenna port adaptation structure information, or antenna port adaptation availability information.

It should be further noted that the embodiments of the present disclosure specify how antenna configurations are performed, the dynamic indication of antenna configuration information, the configuration of reference signal resources associated with antenna configuration information, and the reporting of measurement results. The specific implementations of these aspects will be described in detail below. It should be noted that these implementations may be used individually or in combination.

### 1. Performing Antenna Configuration

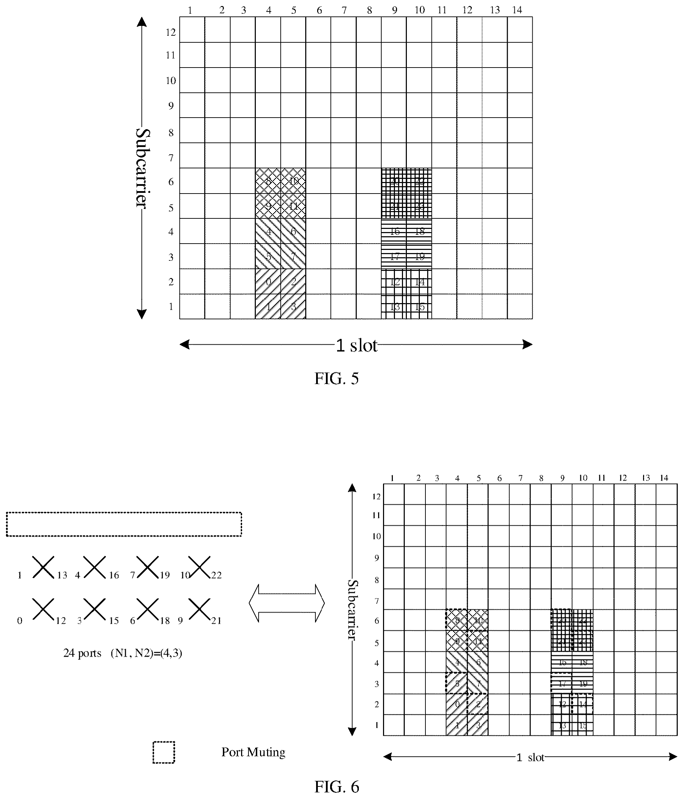

As shown in Figure 5, an example supported by related technologies is a 24-port CSI-RS resource composed of six code division multiplexing (CDM) groups, with each CDM group containing four antenna ports. In the NR standard, a K-port CDM group refers to K CSI-RS antenna ports, where each port occupies the same K resource elements (REs). The transmitter sends signals through up to K orthogonal codewords via different antenna ports, so that from the receiver's perspective, the CSI-RS signals from different antenna ports are multiplexed and modulated together. Each CDM group in Figure 5 provides the terminal with four antenna ports, and different CDM groups are combined through frequency-division multiplexing (FDM) and time-division multiplexing (TDM) to form a 24-port CSI-RS resource. An example of CSI-RS antenna port muting is shown in Figure 6. Among the 24 CSI-RS antenna ports in Figure 6, ports 2, 5, 8, 11, 14, 17, 20, and 23 are muted and no longer available, meaning that the REs labeled "muting" in Figure 6 no longer transmit the corresponding reference signals. As a result, only 16 antenna ports remain available in the CSI-RS resource shown in Figure 5. Antenna ports can be deactivated from a maximum-port CSI-RS resource, or alternatively, a smaller number of antenna ports can be activated and expanded to achieve more antenna ports. Therefore, antenna port adaptation better describes the dynamic changes in antenna ports. The embodiments of the present disclosure may adopt the following implementation methods for adaptive antenna port configuration.

The network device may configure antenna configuration information for the terminal through RRC signaling or dynamic signaling.

Optionally, in the embodiments of the present disclosure, the antenna configuration information includes or is associated with at least one of the following:

### A11. Deactivated antenna port set:

It should be noted that, preferably, the antenna configuration information is a set of deactivated antenna ports. This configuration method can save more signaling overhead. For example, the network device may configure a reference signal resource (i.e., measurement resource, specifically a CSI-RS resource) with the maximum number of antenna ports as the baseline reference signal resource. Then, the antenna configuration information-i.e., the set of deactivated antenna ports-is configured for this reference signal resource. Since different antenna configuration information is based on a common baseline, this compresses configuration signaling and reduces overhead.

### A12. Activated antenna port set:

For example, a subset of the activated antenna port set can be regarded as an antenna port adaptation pattern.

It should be noted that an antenna port set typically consists of at least one antenna port.

Optionally, the antenna configuration information may also be the activated antenna port set. Alternatively, the antenna configuration information may include both the activated antenna port set and the deactivated antenna port set. For instance, the network device configures a 24-port CSI-RS resource using higher-layer signaling. For a 16-port CSI-RS resource (smaller than 24 ports), the network device indicates the deactivated antenna port set as the antenna configuration information. For a 32-port CSI-RS resource (larger than 24 ports), the network device configures an additional activated antenna port set using higher-layer signaling. Although this configuration method may not achieve optimal performance, it provides greater flexibility for network device configuration.

### A13. First and second dimensions of the antenna array:

It should be noted that the first dimension (i.e., N1) refers to the number of dual-polarized antennas in the horizontal direction of the antenna array, and the second dimension (i.e., N2) refers to the number of dual-polarized antennas in the vertical direction.

Preferably, the antenna configuration information may include the dimensional information of the antenna port array, i.e., the first dimension N1 and the second dimension N2. Here, the antenna port array refers to the dimensional information of the activated antenna array after antenna deactivation. When the network device notifies the terminal of the antenna port deactivation pattern via dynamic signaling or higher-layer semi-static signaling (e.g., RRC signaling), it is preferable to include not only specific port deactivation information (e.g., notifying the terminal at the granularity of antenna ports or antenna port groups) but also the first dimension N1 and second dimension N2 of the antenna array in the antenna configuration information. The benefit of this configuration is that the dimensional information of the antenna array is closely related to the acquisition of the digital precoding matrix. Although the network device notifies the terminal of specific antenna port deactivation information (e.g., deactivation or activation patterns), the dimensional information of the antenna array is related to the layout of the base station's antenna array, which the terminal does not know. Therefore, the network device notifies the terminal of the first dimension N1 and second dimension N2 of the antenna array after adaptive operations via the antenna configuration information, facilitating the terminal in deriving the PMI.

### A14. Antenna panel indication information:

Optionally, the antenna panel indication may include the identifier of the antenna panel and/or the number of antenna panels.

### A15. CSI report indication information:

This information may indicate the CSI report to be reported or the CSI report to be canceled. For example, it may include the identifier of the CSI report.

### A16. Antenna port quantity information:

It should be noted that this information indicates the total number of antenna ports.

### A17. Antenna port pattern:

It should be noted that A13 and/or A14 may constitute the antenna port pattern. In other words, the antenna port pattern can be used to indicate the antenna array.

Optionally, the granularity (or basic unit) of the set formed by the antenna configuration information includes at least one of the following:

### A21. Single antenna port identifier:

For example, for 32 ports, the antenna port identifiers are {3000, 3001, ..., 3031}, and the granularity of the set formed by the antenna configuration information may correspond to at least one value in the set {3000, 3001, ..., 3031}.

### A22. Information determined by a function of a single antenna port identifier:

For example, for 32 ports, the antenna port identifier function is {3000, 3001, ..., 3031} 3000 = {0, 1, 2, ..., 31}, and the granularity of the set formed by the antenna configuration information is at least one value in {0, 1, 2, ..., 31}.

It should be noted that since both the network device and the terminal are aware of the antenna port identifiers, the descriptions of antenna configuration information based on antenna port identifiers (A21 and A22) will not cause ambiguity for the terminal.

### A23. A group of antenna ports:

It should be noted that a group of antenna ports includes a certain number of antenna ports. For example, the number of antenna ports in a group may be an integer multiple of the first dimension N1 or the second dimension N2 of the antenna array. This can be understood as: at least one row in the antenna port array is associated with an integer multiple of N1 antenna ports, and at least one column in the antenna port array is associated with an integer multiple of N2 antenna ports.

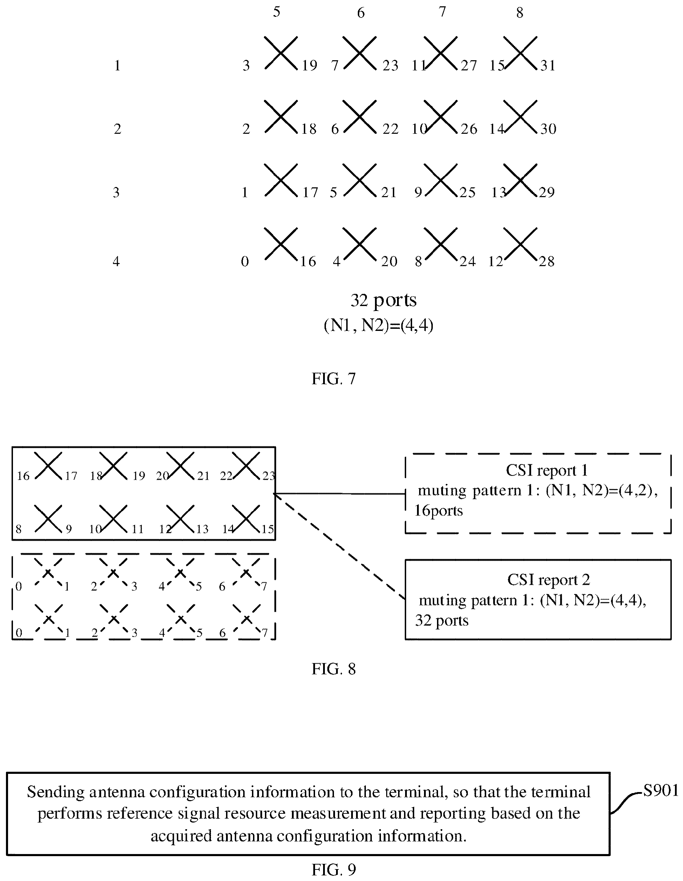

Preferably, this can be interpreted as: the granularity of the set formed by the antenna configuration information is an antenna port set, such as a set of ports corresponding to one row or one column of dual-polarized antennas in the antenna array. Taking the 32-port single-panel CSI-RS antenna port array (N1=4, N2=4) shown in Figure 7 as an example: the network device may indicate the antenna configuration information as deactivating at least one row (or column) of dual-polarized antennas or activating at least one row (or column) of dual-polarized antennas. In other words, the antenna configuration information includes the set of deactivated rows and/or columns of the antenna array. For example, the antenna ports are divided into multiple groups based on rows and columns of the antenna array, as shown in Figure 7 (divided into 8 groups). Preferably, the network device configures at least one antenna port adaptation pattern set for the terminal via RRC signaling. Each antenna port adaptation pattern includes at least one antenna port group (e.g., each group in Figure 7 corresponds to one row or one column of antennas). More specifically, if the antenna port adaptation pattern = {1, 2}, it means deactivating the first row of antenna ports (with identifiers {3, 19, 7, 23, 11, 27, 15, 31}) and the second row (with identifiers {2, 18, 6, 22, 10, 26, 14, 30}). Since this configuration method based on antenna port groups incurs minimal overhead, the antenna configuration information may indicate activated or deactivated antenna ports-more specifically, the set of activated or deactivated rows and/or columns in the antenna array. The benefit of this approach is that since the basic unit of antenna deactivation is based on rows or columns of the antenna array, the network device can prioritize deactivating antennas in the vertical dimension to maintain coverage while significantly reducing configuration signaling overhead compared to using individual antenna port identifiers as the basic element.

Optionally, in the embodiments of the present disclosure, the antenna configuration information should also satisfy:
The antenna array information determined based on the antenna configuration information belongs to a predefined set.

Optionally, the antenna array information includes or is associated with one of the following:
A31. Antenna port quantity information of the antenna array.
A32. First and second dimensions of the antenna array.
A33. Antenna panel indication information.
A34. Antenna port pattern.

It should be noted that the terminal does not expect the antenna array information determined based on the antenna configuration information configured by the network device to fall outside the predefined set.

Optionally, the predefined set satisfies at least one of the following:
A41. The predefined set is associated with a predefined antenna port set.
A42. The predefined set is associated with the first and second dimensions of the antenna array corresponding to the antenna ports.
A43. The predefined set is associated with the first and second dimensions of the antenna array corresponding to the antenna ports and the number of antenna panels.

Optionally, for antenna ports based on a single-panel array, the predefined set is as shown in Table 1. Assuming a 32-port CSI-RS corresponds to an antenna array dimension of (N1, N2) = (8, 2), and half of the antenna ports are deactivated (retaining 16 ports), the antenna array dimension formed by the remaining 16 ports must be one of the dimensions listed in the "16-port" row of Table 1. For example, it could be (8, 1) by deactivating one vertical antenna or (4, 2) by deactivating four horizontal antennas from the original (8, 2) array. However, it is not allowed to deactivate specific horizontal antenna ports in the (8, 2) array to obtain a port count or array pattern not listed in Table 1. The terminal does not expect the antenna array port count and/or pattern determined by the network device's antenna configuration information to fall outside the predefined set.

**Table 1: 1^{st} Example of Predefined Set**

| Antenna Ports | (*N₁, N*₂) |
|---|---|
| 4 | (2,1) |
| 8 | (2,2) |
| | (4,1) |
| 12 | (3,2) |
| | (6,1) |
| 16 | (4,2) |
| | (8,1) |
| 24 | (4,3) |
| | (6,2) |
| | (12,1) |
| 32 | (4,4) |
| | (8,2) |
| | (16,1) |

Optionally, for antenna ports based on multiple antenna panels (multi-panel), the predefined set is as shown in Table 2:

**Table 2: 2^{nd} Example of Predefined Set**

| Antenna Ports | (*N_{g}, N₁, N₂*) |
|---|---|
| 8 | (2,2,1) |
| 16 | (2,4,1) |
| | (4,2,1) |
| | (2,2,2) |
| 32 | (2,8,1) |
| | (4,4,1) |
| | (2,4,2) |
| | (4,2,2) |

The antenna port is composed of multiple panels, and the antenna array in each panel has the same antenna array dimensions, where N1 is the number of columns in the antenna array of a single panel, and N2 is the number of rows in the antenna array of a single panel. For example, for a 32-port corresponding antenna array, the number of ports and/or the array pattern of the antenna array determined based on the antenna configuration information must belong to Table 2 or Table 1. More specifically, the preferred method for deactivating multi-panel antenna ports is as follows: each antenna panel adopts the same deactivation pattern; otherwise, antenna deactivation is performed on a per-panel basis. For example, (4,2,2) represents a 32-antenna port composed of 4 antenna panels, where 2 panels can be deactivated to obtain (2,2,2) corresponding to 16 ports, while the antenna ports of the remaining active panels remain unchanged. Alternatively, one of every two vertical antennas in each panel can be deactivated to obtain a 16-port corresponding antenna array (4,2,1), i.e., 4 antenna panels with each panel having antenna array dimensions of (2,1). The terminal does not expect the number of ports and/or the array pattern of the antenna array determined based on the antenna configuration information configured by the network device to fall outside the predefined set.

Preferably, the predefined set may be further constrained. For example, the predefined set may specify the number of remaining active ports after antenna port deactivation. In the case of a single panel, the constraint may be limited to no more than 2 bits, i.e., the port number set = {32, 16}, meaning only deactivation from 32 ports to 16 ports is allowed. Alternatively, the port number set = {32, 24, 16, 12}, meaning deactivation from 32 ports to 24, 16, or 12 ports is allowed. Or, the port number set = {32, 24, 16}, meaning deactivation from 32 ports to 24 or 16 ports is allowed. For example, when the port number set = {32, 24, 16} is supported, an example of the corresponding predefined set for a single antenna panel is shown in Table 3. When the port number set = {32, 16} is supported, an example of the corresponding predefined set for multiple antenna panels is shown in Table 4.

**Table 3: 3^{rd} Example of Predefined Set**

| Antenna Ports | (*N₁, N₂*) |
|---|---|
| 16 | (4,2) |
| | (8,1) |
| 24 | (4,3) |
| | (6,2) |
| | (12,1) |
| 32 | (4,4) |
| | (8,2) |
| | (16,1) |

**Table 4: 4^{th} Example of Predefined Set**

| Antenna Ports | (*N_{g}, N₁, N₂*) |
|---|---|
| 16 | (2,4,1) |
| | (4,2,1) |
| | (2,2,2) |
| 32 | (2,8,1) |
| | (4,4,1) |
| | (2,4,2) |
| | (4,2,2) |

It should be noted that determining the number of antenna array ports and/or the array pattern of the antenna array based on the antenna configuration information configured by the network device, such that they belong to the predefined set, can ensure that the network device side can more easily determine the precoding matrix and reduce standardization complexity. Further limiting the predefined port set as shown in Tables 3 and 4 helps reduce measurement overhead and CSI overhead on the terminal side. This is because the terminal side may need to perform channel measurement and feedback for each antenna port set determined by the antenna configuration information. However, simulation results indicate that when the RF chain is switched from 64 to 32, the energy-saving gain of the network device is maximized, and the impact on the terminal is minimized. Further deactivation of the network device antennas provides limited energy-saving gains due to restricted applicable scenarios. Therefore, limiting the allowed antenna port set helps reduce complexity on the terminal side without significantly compromising the energy-saving performance of the network device.

### II. Dynamic Indication of Antenna Configuration Information

Optionally, in the embodiments of the present disclosure, before the step of obtaining the antenna configuration information sent by the network device, the method further includes:
acquiring at least one reference signal resource configured by the network device through Radio Resource Control (RRC) signaling, where the reference signal resource is associated with at least one antenna configuration information.

For example, the statement the reference signal resource is associated with at least one antenna configuration information can be understood as each reference signal resource being associated with at least one antenna configuration information, or as multiple (i.e., two or more) reference signal resources being associated with at least one antenna configuration information. For instance, each reference signal resource may be associated with one antenna configuration information, and different reference signal resources may be associated with different antenna configuration information. Alternatively, multiple reference signal resources may be associated with the same antenna configuration information, or multiple reference signal resources may be associated with multiple antenna configuration information.

Further, the step of obtaining the antenna configuration information sent by the network device includes:
receiving an antenna configuration indication sent by the network device through dynamic signaling;
determining the antenna configuration information indicated by the dynamic signaling based on the antenna configuration indication;
wherein, the antenna configuration information indicated by the dynamic signaling is a subset of the at least one antenna configuration information associated with the at least one reference signal resource configured by the RRC signaling, and the subset includes at least one antenna configuration information;
wherein, the reference signal resource includes: periodic reference signal resources, semi-persistent reference signal resources, or aperiodic reference signal resources.

It should be noted that the antenna configuration indication may be an identifier corresponding to the antenna configuration information or the actual content included in the antenna configuration information, such as at least one of A 11-A 17.

For example, the reference signal resource may be a Channel State Information Reference Signal (CSI-RS) resource, a CSI-RS resource set, or a CSI-RS configuration (CSI-ResourceConfig).

It should be noted that in this implementation, the terminal is first configured with at least one reference signal resource associated with antenna configuration information. The network device then uses dynamic signaling (e.g., Downlink Control Information (DCI) or a Medium Access Control-Control Element (MAC-CE)) to indicate which antenna configuration information (e.g., antenna adaptation pattern) should be used or which antenna configuration information should be deactivated. Based on this indication, the terminal can determine which reference signal resources need to be measured.

For example, the network device configures periodic reference signal resource A, periodic reference signal resource B, and periodic reference signal resource C through RRC signaling, where periodic reference signal resource A corresponds to antenna configuration information for 64 ports, periodic reference signal resource B corresponds to antenna configuration information for 32 ports, and periodic reference signal resource C corresponds to antenna configuration information for 16 ports. Subsequently, the network device uses DCI to indicate the use of the 32-port antenna configuration information. Upon receiving the DCI, the terminal measures and reports periodic reference signal resource B.

It should be noted that by first configuring at least one reference signal resource associated with at least one antenna configuration information through RRC signaling, the network side can dynamically deactivate the antenna array during CSI-RS transmission based on the RRC signaling configuration. This reduces the overhead of dynamic signaling for the network device and improves the execution efficiency of network device energy-saving measures.

Optionally, when the reference signal resource comprises a periodic reference signal resource, the method further comprises at least one of the following:
B11. Before the terminal receives antenna configuration information sent by the network device through dynamic signaling, performing measurement and reporting on a preset reference signal resource;
Optionally, the preset reference signal resource comprises: all periodic reference signal resources configured by the network device or a default periodic reference signal resource.

Further optionally, the default periodic reference signal resource is specified by protocol or configured by higher-layer signaling.

It should be noted that the system may predefine the default periodic reference signal resource, where the predefined manner may, for example, be protocol specification. Preferably, the protocol specifies that a resource with a muting pattern=NULL or a CSI-RS resource with the smallest antenna adaptation pattern index serves as the default periodic reference signal resource.

This scenario can be understood as follows: before the terminal receives RRC signaling configuration but has not yet received antenna configuration information indicated by dynamic signaling, the terminal performs measurements on all periodic reference signal resources associated with the antenna configuration information configured by the base station, or the terminal only performs measurements on the default periodic reference signal resource.

For example, the network device configures periodic reference signal resource A, periodic reference signal resource B, and periodic reference signal resource C through RRC signaling, where periodic reference signal resource A corresponds to antenna configuration information for 64 ports, periodic reference signal resource B corresponds to antenna configuration information for 32 ports, and periodic reference signal resource C corresponds to antenna configuration information for 16 ports. Subsequently, the network device may indicate, via DCI, the use of antenna configuration information for 32 ports. Before receiving the antenna configuration information for 32 ports indicated by DCI, the terminal may perform measurements on periodic reference signal resource A, periodic reference signal resource B, and periodic reference signal resource C configured by the network device through RRC signaling. Alternatively, if a default periodic reference signal resource is configured (e.g., the protocol specifies periodic reference signal resource A as the default), the terminal only performs measurements on the default periodic reference signal resource.
B 12. When the terminal receives antenna configuration information sent by the network device through dynamic signaling, stopping the reporting of measurement reports for the preset reference signal resource;

It should be noted that before the terminal receives RRC signaling configuration but has not yet received antenna configuration information indicated by dynamic signaling, the terminal may perform measurement and reporting on the preset reference signal resource. However, after receiving the antenna configuration information indicated by dynamic signaling, the terminal needs to re-determine the reference signal resources to be measured based on the antenna configuration information and report accordingly. Continuing to report measurement reports for the preset reference signal resource at this stage may result in unnecessary signaling overhead. Therefore, to conserve signaling overhead, in the embodiments of the present disclosure, when the terminal receives antenna configuration information sent by the network device through dynamic signaling, it stops reporting measurement reports for the preset reference signal resource.

The explanation of the preset reference signal resource in this scenario is the same as described in B11 and will not be repeated here.
B 13. When the terminal receives antenna configuration information sent by the network device through dynamic signaling, reporting the measurement report indicated by the antenna configuration information;

It should be noted that when the network device indicates antenna configuration information through dynamic signaling, it may also configure CSI reporting indication information. If the CSI reporting indication information specifies CSI reports that need to be reported, the terminal must report the CSI reports indicated by the CSI reporting indication information to the network device.
B14. When the terminal receives antenna configuration information sent by the network device through dynamic signaling, stopping the reporting of the measurement report indicated by the antenna configuration information;

It should be noted that when the network device indicates antenna configuration information through dynamic signaling, it may also configure CSI reporting indication information. If the CSI reporting indication information specifies CSI reports to be canceled, the terminal must stop reporting the CSI reports indicated for cancellation-i.e., it will not send the CSI reports marked for cancellation to the network device. This helps reduce signaling overhead.
B15. When the terminal receives antenna configuration information sent by the network device through dynamic signaling, lowering the reporting priority of measurement reports for reference signal resources associated with deactivated antenna ports indicated by the antenna configuration information;

It should be noted that after obtaining the dynamically indicated antenna configuration information from the network device, the terminal can determine which antenna ports are deactivated. At this point, the terminal sets the reporting priority of measurement reports for reference signal resources associated with the deactivated antenna ports to a lower level, thereby reducing the transmission frequency of such reports and saving signaling overhead.
B16. When the terminal receives antenna configuration information sent by the network device through dynamic signaling, stopping the reporting of measurement reports for reference signal resources associated with deactivated antenna ports indicated by the antenna configuration information;

It should be noted that after obtaining the dynamically indicated antenna configuration information from the network device, the terminal can determine which antenna ports are deactivated. At this point, the terminal stops reporting measurement reports for reference signal resources associated with the deactivated antenna ports to the network device, thereby conserving signaling overhead.

The following provides an example scenario where a network device (e.g., a base station) configures CSI-RS resources (resources) via RRC signaling, using antenna port adaptation patterns as an example of antenna configuration information.

### Application Scenario 1: Base Station Configures Periodic CSI-RS Resources via RRC Signaling

This scenario includes the following steps:
11. The base station configures at least one periodic CSI-RS resource (resource) for the terminal via RRC signaling, where the CSI-RS resource is associated with at least one antenna port adaptation pattern.

Optionally, the base station configures the granularity as a single antenna port adaptation pattern or a periodic CSI-RS resource associated with an antenna port adaptation pattern. For example, one antenna port adaptation pattern corresponds to one ID. Alternatively, the base station configures the granularity as an antenna port adaptation pattern group or a measurement resource associated with an antenna port adaptation pattern group. For example, one antenna port adaptation pattern group corresponds to one ID.

12. The base station indicates at least one antenna port adaptation pattern to the terminal via dynamic signaling (e.g., MAC-CE or Physical Downlink Control Channel (PDCCH)).

Optionally, the PDCCH or MAC-CE explicitly indicates at least one antenna port adaptation pattern that the terminal needs to measure and report. The indication granularity may be a single antenna port adaptation pattern, requiring a corresponding number of bits (e.g., 2-bit DCI carrying four code points, each representing a different antenna port adaptation pattern). Alternatively, the indication granularity may be an antenna port adaptation pattern group, allowing a single bit in the DCI to indicate the pattern group, which contains multiple antenna port adaptation patterns.

13. After receiving the at least one antenna port adaptation pattern indicated by the dynamic signaling, the terminal performs periodic channel measurements on the CSI-RS resources associated with the indicated antenna port adaptation patterns and periodically reports the CSI measurement results.

It can specifically include one of the following solutions:

### Solution 1:

Optionally, after the terminal receives the periodic CSI-RS resources associated with at least one antenna port configured by RRC signaling but before receiving the antenna port adaptation pattern indicated by dynamic signaling, the terminal behavior may optionally include: measuring all periodic CSI-RS resources associated with the adaptation patterns configured by the base station; or optionally, the terminal behavior may include: the terminal only measures pre-agreed periodic CSI-RS resources (e.g., default periodic CSI-RS resources, which require configuration by higher-layer signaling from the base station). For example, if the base station configures a 32-port CSI-RS and an antenna port adaptation pattern based on this 32-port CSI-RS, the terminal, before receiving dynamic signaling, only measures this 32-port CSI-RS and does not measure any periodic CSI-RS resources associated with antenna port deactivation. After the terminal receives the dynamically indicated antenna port adaptation pattern, it measures at least the periodic CSI-RS resources associated with the adaptation pattern indicated by the dynamic signaling and reports the measurement results. Optionally, after receiving the dynamic signaling, the terminal may cease measuring the initially configured pre-agreed periodic CSI-RS resources. For example, if the dynamic signaling instructs the terminal to measure 16-port and 24-port CSI-RS, the terminal will no longer measure or report the 32-port CSI-RS that was measured before receiving the dynamic signaling.

It should be noted that the base station configures at least one antenna port adaptation pattern for the terminal using RRC signaling. If the terminal measures and reports all periodic CSI-RS resources associated with these patterns, but the base station only uses one antenna port for transmission, the CSI reporting would be redundant, leading to excessive feedback overhead for the terminal. However, if only one adaptation pattern is measured and reported at a time, the base station may not obtain sufficient channel state information for scheduling decisions. Therefore, this solution employs dynamic signaling to indicate at least one antenna port adaptation pattern, balancing terminal feedback overhead with base station energy efficiency and transmission performance. Technically, the periodic CSI-RS resource measurements yield long-term channel measurement results, and the terminal's reported measurements based on base station indications remain long-term results, consistent with the technical principle of periodic CSI reporting. Before receiving dynamic signaling, the terminal may measure and report default periodic CSI-RS resources to maintain basic operations. After receiving dynamic signaling, the terminal measures and reports according to the dynamic signaling and ceases measuring default periodic CSI-RS resources. This allows the base station to dynamically deactivate antenna arrays during CSI-RS transmission, achieving efficient energy savings and effective terminal feedback overhead reduction.

### Solution 2:

Preferably, the base station side includes CSI report cancellation information or CSI identification information to be reported in the antenna port adaptation pattern. The base station configures the terminal with periodic CSI-RS resources to be measured using RRC signaling. The terminal performs CSI measurement on the periodic CSI-RS resources based on the base station configuration information and reports CSI according to the base station's indication. For example, Figure 8 provides an example where the base station configures the terminal with two CSI-RS resources corresponding to two CSI measurement reports using RRC signaling. Specifically, in Figure 8, one 32-port CSI-RS resource is associated with one (e.g., periodic/semi-persistent) CSI measurement report (CSI report 2), and the second CSI-RS resource is a 16-port CSI-RS resource corresponding to another (e.g., periodic/semi-persistent) CSI measurement report (CSI report 1). The base station uses dynamic signaling to explicitly or implicitly include CSI report discarding information or CSI identification information to be reported in the antenna port adaptation pattern. For example, the antenna port adaptation pattern configured by RRC signaling includes the antenna port pattern, first-dimension and second-dimension information of the antenna array, and CSI report cancellation information. The CSI report cancellation information may be an explicit or implicit identifier of the CSI-RS resources to be measured. An explicit identifier may be, for example, a CSI-RS resource ID, while an implicit identifier may be a port muting pattern index. Beneficial Effects: When 16 antennas are dynamically deactivated, and the base station, for example, instructs the UE to turn off 16 antennas, the two CSI-RS resources originally measured by the UE are effectively the same. Discarding the inaccurate CSI report 2 helps reduce UE feedback overhead. In contrast, in related technologies, periodic/semi-persistent CSI reporting is configured for both resources, and the two CSIs are reported periodically regardless of whether the antennas are deactivated.

The terminal receives antenna adaptation indication information. If the antenna configuration information includes CSI report cancellation (i.e., information on canceling the reporting of a CSI report) or reporting information (i.e., information on the CSI report to be reported), the terminal reports the corresponding CSI report or discards the corresponding CSI report according to the base station's indication. Alternatively, if the antenna configuration information received by the terminal does not include explicit information on CSI report cancellation or reporting, the terminal reduces the priority of reporting the CSI report associated with the CSI-RS resources related to antenna deactivation or abandons reporting the CSI report associated with the CSI-RS resources linked to the deactivated antenna ports.

Application Scenario 2: Network Device Configures Semi-Persistent or Aperiodic Reference Signal Resources via RRC Signaling

This scenario includes the following steps:
21. The base station configures at least one CSI-RS resource (which may be a semi-persistent CSI-RS resource or an aperiodic CSI-RS resource) for the terminal via RRC signaling. The aforementioned CSI-RS resource is associated with at least one antenna port adaptation pattern.
   Optionally, the granularity of the base station configuration may be one antenna port adaptation pattern or measurement resources associated with one antenna port adaptation pattern. For example, one antenna port adaptation pattern corresponds to one ID. Alternatively, the granularity of the base station configuration may be an antenna port adaptation pattern group or measurement resources associated with an antenna port adaptation pattern group. For example, one antenna port adaptation pattern group corresponds to one ID.
22. The base station uses dynamic signaling (e.g., MAC-CE or PDCCH) to indicate at least one antenna port adaptation pattern to the terminal.
   Optionally, the PDCCH or MAC-CE explicitly indicates at least one antenna port adaptation pattern that the UE needs to measure and report. The indication granularity may be a single antenna port adaptation pattern, in which case indicating at least one antenna port adaptation pattern requires a corresponding number of bits. For example, four code points (code points) carried by 2-bit DCI may correspond to different antenna port adaptation patterns. Alternatively, the indication granularity may be an antenna port adaptation pattern group, in which case a single bit in the DCI can indicate an adaptation pattern group containing multiple antenna port adaptation patterns.
23. After receiving the at least one antenna port adaptation pattern indicated by the dynamic signaling, the UE performs channel measurement on the reference signal resources associated with the indicated antenna port adaptation pattern and reports the CSI measurement results.

Unlike periodic CSI-RS reporting, semi-persistent and aperiodic channel measurement and reporting are entirely dependent on dynamic signaling and are unrelated to periodic measurement reporting.

### III. Configuration of Reference Signal Resources Associated with Antenna Configuration Information

Optionally, in the embodiments of the present disclosure, the reference signal resources associated with the antenna configuration information are quasi-co-located (QCL) with respect to Type D (TypeD).

Optionally, Type D includes spatial reception parameters, which are primarily used in the NR protocol to describe beam direction-related parameters.

It should be noted that in this scenario, by configuring multiple reference signal resources as quasi-co-located (QCL), the terminal can complete measurements without frequently performing beam switching, thereby reducing terminal power consumption. Meanwhile, the network device side does not need to frequently switch transmission beams, reducing processing complexity on the network device side.

### IV. Reporting of Measurement Reports

### Scenario 1: Limiting the Number of Measurement Reports

Optionally, in the embodiments of the present disclosure, the optional implementation of performing reference signal resource measurement and reporting based on the antenna configuration information includes:
Measuring M reference signal resources and reporting N measurement reports based on the antenna configuration information;
where M and N are integers greater than or equal to 1, and M is greater than or equal to N.

It should be noted that in this scenario, the network device configures at least one antenna configuration information associated with at least one reference signal resource (which can also be regarded as measurement resources) for the terminal via RRC signaling or dynamic signaling. The terminal measures the aforementioned at least one reference signal resource to obtain M CSI measurement reports, or measures M reference signal resources associated with at least one antenna port adaptation pattern to obtain M CSI measurement reports. The terminal feeds back a maximum of N CSI measurement results. It can be understood that the network device configures M reference signal resources for the terminal, the terminal obtains M CSI measurement results, and the terminal may select N of them for reporting.

It should be noted that since the at least one antenna configuration information configured by the network device for the terminal is associated with M reference signal resources, M measurement results will be obtained. To reduce terminal feedback overhead, the terminal may select N of them, such as the N with better channel conditions, for feedback, which can significantly reduce terminal feedback overhead.

### Scenario 2: Limiting the Set of Measurement Result Feedback Values Referenced by the Reported Measurement Reports

Optionally, the embodiments of the present disclosure also enhance beam reporting, which may specifically adopt one of the following implementations.

### Implementation 1: Network Device Configures the Set of Measurement Result Feedback Values via Higher-Layer Signaling

Optionally, before performing reference signal resource measurement and reporting based on the antenna configuration information, the method further includes:
receiving the set of measurement result feedback values configured by the network device via higher-layer signaling;
wherein performing reference signal resource measurement and reporting based on the antenna configuration information includes:
   performing reference signal resource measurement based on the antenna configuration information and feeding back measurement reports based on the set of measurement result feedback values.

It should be noted that the set of measurement result feedback values may be an L1-RSRP value set, an L1-SINR value set, or both an L1-RSRP value set and an L1-SINR value set.

In this scenario, the network device needs to configure an L1-RSRP value set (also referred to as an L1-RSRP value range) and/or an L1-SINR value set (also referred to as an L1-SINR value range) for the terminal via higher-layer signaling. That is, when the network device configures an L1-RSRP value set and/or an L1-SINR value set for the terminal, the terminal reports measurement results based on the L1-RSRP value set and/or L1-SINR value set configured by the network device.

For example, the network device configures a T1-bit L1-RSRP value set for the terminal via higher-layer signaling, such as [Y1 dBm, -44 dBm]. When the network device configures an L1-RSRP value set for the terminal, the terminal reports based on the L1-RSRP value set configured by the network device's higher-layer signaling and no longer reports based on the 7-bit range agreed in the protocol. Preferably, the minimum value Y1 of the L1-RSRP value set is < -140 dBm, or T1 > 7.

For example, the network device configures a T2-bit (e.g., T2 = 8) L1-SINR value set for the terminal via higher-layer signaling, such as [Y2, 40] dB (e.g., [-64, 40] dB or [-87, 40] dB with a step of 0.5 dB). When the network device configures an L1-SINR value set for the terminal, the terminal reports based on the L1-SINR value set configured by the network device's higher-layer signaling and no longer reports based on the 7-bit range agreed in the protocol. Preferably, the minimum value Y2 of the L1-SINR value set is < -23 dB, or T2 > 7.

It should be noted that in this scenario, by redefining the set of measurement result feedback values indicated by the network device, the accuracy of terminal measurement feedback can be ensured.

### Implementation 2: Protocol Predefines Multiple Sets of Measurement Result Feedback Values

Optionally, before performing reference signal resource measurement and reporting based on the antenna configuration information, the method further includes:
acquiring multiple sets of measurement result feedback values predefined by the protocol;
wherein performing reference signal resource measurement and reporting based on the antenna configuration information includes:
   performing reference signal resource measurement based on the antenna configuration information and, based on the multiple sets of measurement result feedback values, sending to the network device the set identifier of the measurement result feedback value set used for reporting and the corresponding value of each measurement report within the set.

For example, the protocol predefines multiple L1-RSRP value sets, such as two L1-RSRP value sets. Preferably, each L1-RSRP value set is 7 bits, e.g., L1-RSRP value set 1 is [-256 dBm, -139 dBm], and L1-RSRP value set 2 is [-140 dBm, -44 dBm]. The terminal feeds back to the network device the set identifier of the adopted L1-RSRP value set and the corresponding value of each measurement report within the set.

For example, the protocol predefines multiple (e.g., two) L1-SINR value sets. Preferably, each L1-SINR value set is 7 bits, e.g., L1-SINR value set 1 is [-23, 40] dB, and L1-SINR value set 2 is [-87, -24] dB. The terminal feeds back the set identifier of the adopted L1-SINR value set and the corresponding value of each measurement report within the set.

It should be noted that in this scenario, the protocol predefines multiple (two or more) sets of measurement result feedback values, and the terminal needs to select one set for measurement reporting based on the measurement results. This scenario enables the terminal to flexibly send measurement reports, ensuring the accuracy of terminal measurement feedback.

Implementation 3: Readjusting the Lower Bound of the Measurement Result Feedback Value Set Predefined by the Protocol

Optionally, performing reference signal resource measurement and reporting based on the antenna configuration information includes:
acquiring a measurement result feedback value set predefined by the protocol, where the minimum value of the set is less than a preset value;
performing reference signal resource measurement based on the antenna configuration information and feeding back measurement reports based on the measurement result feedback value set.

It should be noted that in this scenario, the set of measurement result feedback values is redefined through protocol agreement to meet the reporting needs of the terminal as much as possible and ensure the accuracy of terminal measurement feedback.

For example, the protocol defines a T3-bit L1-RSRP value set, such as [Y3 dBm, -44 dBm]. Preferably, T3 > 7 or the minimum value Y3 of the L1-RSRP value set is < -140 dBm. The terminal reports RSRP based on this L1-RSRP value set. That is, when the measurement result feedback value set is an L1-RSRP value set, the preset value is -140 dBm.

For example, the protocol predefines a T4-bit L1-SINR value set, such as [Y4, 40] dB. Preferably, T4 > 7 or the minimum value Y4 of the set is < -23. The terminal reports L1-SINR based on this L1-SINR value set with a step of 0.5 dB. That is, when the measurement result feedback value set is an L1-SINR value set, the preset value is -23 dB.

It should be noted that when CSI-RS is configured to report L1-RSRP or L1-SINR, it is used to perform beam management functions. The NR standard configures an L1-RSRP range of [-140, -44] dBm for the terminal, and the terminal reports L1-RSRP values within this range. The L1-SINR range is [-23, 40] dB, and the terminal reports L1-SINR values within this range. However, when antennas are adaptively turned off, if the associated RF chain is also turned off, link quality will degrade, and the RSRP and SINR values of each beam may become smaller. If this is not corrected, the feedback of multiple beam measurement results by the terminal will be inaccurate, affecting the scheduling performance of the network device. The beam reporting enhancement scheme in the embodiments of the present disclosure ensures that the terminal accurately reports multiple beam measurement results.

Embodiments of the present disclosure focus on dynamic adaptive details in the antenna domain and introduce improvements from multiple perspectives to achieve the following beneficial effects:
Effectively reducing configuration overhead while efficiently utilizing relevant Multi-Input Multi-Output (MIMO) codebooks;
Reducing feedback overhead for terminals;
Lowering energy consumption of network devices;
Enhancing the performance of network devices.

The technical solutions provided by the embodiments of the present disclosure can be applied to various systems, particularly 5G systems. For example, applicable systems may include a Global System for Mobile Communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G New Radio (NR) system, and the like. These systems include terminal devices and network devices. The systems may also include core network components, such as an Evolved Packet System (EPS), a 5G System (5GS), etc.

The terminal referred to in the embodiments of the present disclosure, also called a terminal device, may be a device that provides users with voice and/or data connectivity, a handheld device with wireless connectivity, or other processing devices connected to a wireless modem. The name of the terminal device may vary in different systems. For example, in a 5G system, the terminal device may be referred to as User Equipment (UE). A wireless terminal device may communicate with one or more Core Networks (CN) via a Radio Access Network (RAN). The wireless terminal device may be a mobile terminal device, such as a mobile phone (or "cellular" phone) or a computer with mobile terminal capabilities, and may be portable, pocket-sized, handheld, computer-integrated, or vehicle-mounted devices that exchange voice and/or data with the wireless access network. Examples include Personal Communication Service (PCS) phones, cordless phones, Session Initiated Protocol (SIP) phones, Wireless Local Loop (WLL) stations, Personal Digital Assistants (PDA), and the like. The wireless terminal device may also be referred to as a system, subscriber unit, subscriber station, mobile station (MS), mobile, remote station, access point, remote terminal, access terminal, user terminal, user agent, or user device, which is not limited in the embodiments of the present disclosure.

The network device involved in the embodiments of the present disclosure may be a base station, which may include multiple cells serving terminals. Depending on the specific application scenario, the base station may also be referred to as an access point or a device in the access network that communicates with wireless terminal devices over one or more sectors via an air interface, or by other names. The network device may convert received air frames into Internet Protocol (IP) packets and vice versa, acting as a router between the wireless terminal device and the rest of the access network, where the rest of the access network may include an IP communication network. The network device may also coordinate the management of air interface attributes. For example, the network device in the embodiments of the present disclosure may be a Base Transceiver Station (BTS) in GSM or CDMA, a NodeB in WCDMA, an evolved Node B (eNB or e-NodeB) in an LTE system, a 5G base station (gNB) in a next-generation system (5G network architecture), a Home evolved Node B (HeNB), a relay node, a femto base station, a pico base station, etc., which is not limited in the embodiments of the present disclosure. In some network architectures, the network device may include a Centralized Unit (CU) node and a Distributed Unit (DU) node, where the CU and DU may also be geographically separated.

The network device and the terminal device may each use one or more antennas for Multi-Input Multi-Output (MIMO) transmission, which may be Single User MIMO (SU-MIMO) or Multiple User MIMO (MU-MIMO). Depending on the configuration and number of antenna combinations, MIMO transmission may be two-dimensional MIMO (2D-MIMO), three-dimensional MIMO (3D-MIMO), Full Dimension MIMO (FD-MIMO), or massive MIMO (massive-MIMO), and may also include diversity transmission, precoding transmission, or beamforming transmission, among others.

As shown in FIG. 9, an embodiment of the present disclosure provides an information transmission method, performed by a network device, including:
Step S901: sending antenna configuration information to a terminal, so that the terminal performs reference signal resource measurement and reporting based on the acquired antenna configuration information.

Optionally, the antenna configuration information includes or is associated with at least one of the following:
A set of deactivated antenna ports;
A set of activated antenna ports;
A first dimension and a second dimension of an antenna array;
Indication information of an antenna panel;
Channel state information (CSI) reporting indication information;
Antenna port number information;
Antenna port pattern.

Optionally, the granularity of the set constituted by the antenna configuration information includes at least one of the following:
A single antenna port identifier;
Information determined by a function of a single antenna port identifier;
A group of antenna ports.

Optionally, the antenna configuration information satisfies:
Antenna array information determined based on the antenna configuration information belongs to a predefined set.

Optionally, the antenna array information includes or is associated with one of the following:
Antenna port number information of the antenna array;
The first dimension and the second dimension of the antenna array;
Indication information of the antenna panel;
Antenna port pattern.

Optionally, the predefined set satisfies at least one of the following:
The predefined set is associated with a predefined antenna port set;
The predefined set is associated with the first dimension and the second dimension of the antenna array corresponding to the antenna ports;
The predefined set is associated with the first dimension and the second dimension of the antenna array corresponding to the antenna ports and the number of antenna panels.

Optionally, the method further includes:
configuring at least one reference signal resource for the terminal through radio resource control (RRC) signaling, where the reference signal resource is associated with at least one antenna configuration information;
The sending antenna configuration information to the terminal includes:
   sending an antenna configuration indication to the terminal through dynamic signaling, so that the terminal determines the antenna configuration information indicated by the dynamic signaling based on the antenna configuration indication;
   wherein, the antenna configuration information indicated by the dynamic signaling is a subset of the at least one antenna configuration information associated with the at least one reference signal resource configured by the RRC signaling, and the subset includes at least one antenna configuration information;
   The reference signal resource includes: periodic reference signal resource, semi-persistent reference signal resource, or aperiodic reference signal resource.

Optionally, the reference signal resource associated with the antenna configuration information is quasi-co-located (QCL) with respect to type D.

Optionally, the method further includes:
Configuring a set of measurement result feedback values for the terminal through higher-layer signaling.

Optionally, the method further includes:
Receiving a set identifier of the set of measurement result feedback values used by the terminal and the corresponding value of each measurement report within the set of measurement result feedback values reported by the terminal.

It should be noted that all implementation manners in the foregoing embodiments are applicable to the embodiment of the information transmission method applied to the network device side and can achieve the same technical effects, which will not be repeated here.

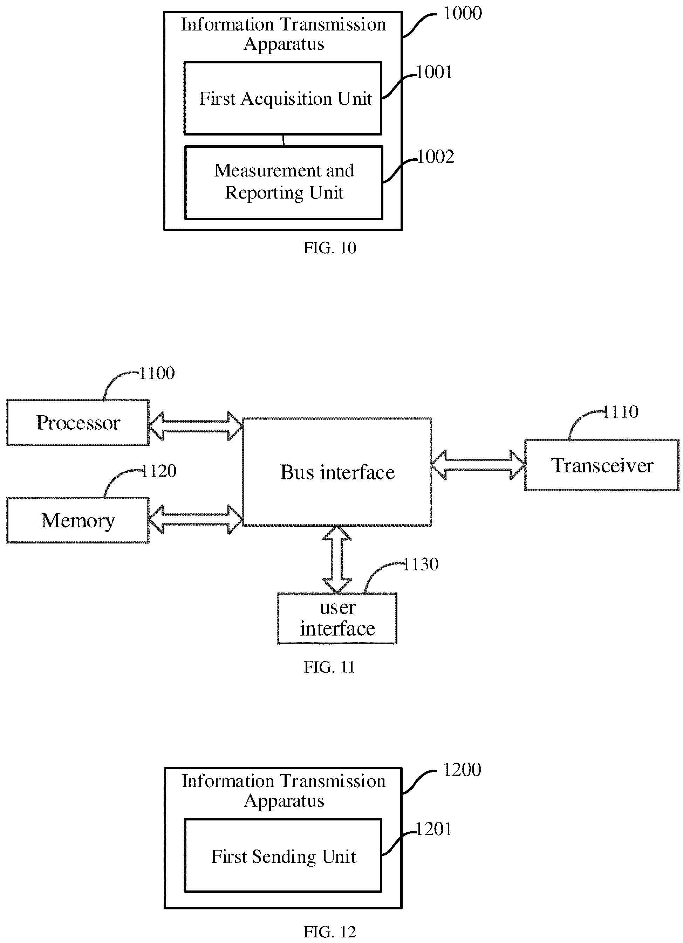

As shown in FIG. 10, an embodiment of the present disclosure provides an information transmission apparatus 1000, applied to a terminal, including:
A first acquisition unit 1001, configured to acquire antenna configuration information sent by a network device;
A measurement and reporting unit 1002, configured to perform reference signal resource measurement and reporting based on the antenna configuration information.

Optionally, the antenna configuration information includes or is associated with at least one of the following:
A set of deactivated antenna ports;
A set of activated antenna ports;
A first dimension and a second dimension of an antenna array;
Indication information of an antenna panel;
Channel state information (CSI) reporting indication information;
Antenna port number information;
Antenna port pattern.

Optionally, the granularity of a set formed by the antenna configuration information includes at least one of the following:
an individual antenna port identifier;
information determined by a function of the individual antenna port identifier;
a group of antenna ports.

Optionally, the antenna configuration information satisfies:
antenna array information determined according to the antenna configuration information belongs to a predefined set.

Optionally, the antenna array information includes or is associated with one of the following:
antenna port number information of an antenna array;
a first dimension and a second dimension of the antenna array;
indication information of an antenna panel;
an antenna port pattern.

Optionally, the predefined set satisfies at least one of the following:
the predefined set is associated with a predefined antenna port set;
the predefined set is associated with a first dimension and a second dimension of an antenna array corresponding to antenna ports;
the predefined set is associated with a first dimension and a second dimension of an antenna array corresponding to antenna ports and a number of antenna panels.

Optionally, the information transmission apparatus 1000 further includes:
a second acquisition unit, configured to acquire at least one reference signal resource configured by a network device through radio resource control (RRC) signaling, the reference signal resource being associated with at least one antenna configuration information;
the first acquisition unit 1001 is configured to:
   receive antenna configuration indication sent by the network device through dynamic signaling;
   determine antenna configuration information indicated by the dynamic signaling according to the antenna configuration indication;
   wherein the antenna configuration information indicated by the dynamic signaling is a subset of at least one antenna configuration information associated with the at least one reference signal resource configured by the RRC signaling, the subset including at least one antenna configuration information;
   wherein the reference signal resource includes: a periodic reference signal resource, a semi-persistent reference signal resource, or an aperiodic reference signal resource.

Optionally, the apparatus further includes at least one of the following:
a first execution unit, configured to perform measurement reporting on a preset reference signal resource before a terminal receives antenna configuration information sent by the network device through dynamic signaling;
a second execution unit, configured to stop reporting a measurement report of a preset reference signal resource in a case where the terminal receives the antenna configuration information sent by the network device through dynamic signaling;
a third execution unit, configured to report a measurement report indicated by the antenna configuration information in a case where the terminal receives the antenna configuration information sent by the network device through dynamic signaling;
a fourth execution unit, configured to stop reporting a measurement report indicated by the antenna configuration information in a case where the terminal receives the antenna configuration information sent by the network device through dynamic signaling;
a fifth execution unit, configured to reduce an reporting priority of a measurement report of a reference signal resource associated with a deactivated antenna port indicated by the antenna configuration information in a case where the terminal receives the antenna configuration information sent by the network device through dynamic signaling;
a sixth execution unit, configured to stop reporting a measurement report of a reference signal resource associated with a deactivated antenna port indicated by the antenna configuration information in a case where the terminal receives the antenna configuration information sent by the network device through dynamic signaling;
wherein the preset reference signal resource includes: all periodic reference signal resources configured by the network device or a default periodic reference signal resource.

Optionally, the default periodic reference signal resource is specified by a protocol or configured by higher layer signaling.

Optionally, the reference signal resource associated with the antenna configuration information is quasi-co-located (QCL) with respect to Type D.

Optionally, the measurement reporting unit 1002 is configured to:
perform measurement on M reference signal resources according to the antenna configuration information, and report N measurement reports;
wherein M and N are integers greater than or equal to 1, and M is greater than or equal to N.

Optionally, the information transmission apparatus 1000 further includes:
a first receiving unit, configured to receive a set of measurement result feedback values configured by the network device through higher layer signaling;
wherein the measurement reporting unit 1002 is configured to:
   perform reference signal resource measurement according to the antenna configuration information, and feedback a measurement report based on the set of measurement result feedback values;
      or,
   the information transmission apparatus 1000 further includes:
      a third acquisition unit, configured to acquire sets of multiple measurement result feedback values specified by a protocol;
      the measurement reporting unit 1002 is configured to:
         perform reference signal resource measurement according to the antenna configuration information, and based on the sets of multiple measurement result feedback values, send to the network device a set identifier of a set of measurement result feedback values used for measurement reporting and a corresponding value within the set of measurement result feedback values for each measurement report;
            or,
         the measurement reporting unit 1002 is configured to:
            acquire a set of measurement result feedback values specified by a protocol, wherein a minimum value of the set of measurement result feedback values is less than a preset value;
            perform reference signal resource measurement according to the antenna configuration information, and feedback a measurement report based on the set of measurement result feedback values.

It should be noted that the division of units in the embodiments of the present disclosure is illustrative and is merely a logical functional division. In actual implementation, there may be another division manner. In addition, functional units in various embodiments of the present disclosure may be integrated into one processing unit, or each unit may exist alone physically, or two or more units may be integrated into one unit. The above integrated units may be implemented in the form of hardware or in the form of software functional units.

If the integrated units are implemented in the form of software functional units and sold or used as independent products, they may be stored in a processor-readable storage medium. Based on such understanding, the technical solutions of the present disclosure, or the part contributing to the related art, or all or part of the technical solutions may be embodied in the form of a software product. The computer software product is stored in a storage medium and includes several instructions for causing a computer device (which may be a personal computer, a server, a network device, or the like) or a processor to execute all or part of the steps of the methods described in the various embodiments of the present disclosure. The foregoing storage medium includes: any medium that can store program codes, such as a USB flash drive, a removable hard disk, a Read-Only Memory (ROM), a Random Access Memory (RAM), a magnetic disk, or an optical disk.

As shown in FIG. 11, an embodiment of the present disclosure further provides a terminal, including a processor 1100, a transceiver 1110, a memory 1120, and a program stored in the memory 1120 and executable on the processor 1100. The transceiver 1110 is connected to the processor 1100 and the memory 1120 via a bus interface. The processor 1100 is configured to read the program in the memory and execute the following process:
acquiring antenna configuration information sent by a network device;
performing reference signal resource measurement reporting according to the antenna configuration information.

The transceiver 1110 is configured to receive and transmit data under the control of the processor 1100.

In FIG. 11, a bus architecture may include any number of interconnected buses and bridges, specifically linking together various circuits represented by one or more processors exemplified by the processor 1100 and a memory represented by the memory 1120. The bus architecture may also link together various other circuits such as peripherals, voltage regulators, and power management circuits. These are well-known in the art and therefore will not be further described herein. The bus interface provides an interface. The transceiver 1110 may be multiple elements, namely including a transmitter and a receiver, providing units for communicating with various other apparatuses over transmission media, including wireless channels, wired channels, optical cables, and other transmission media. For different user equipment, a user interface 1130 may also be an interface capable of externally or internally connecting necessary devices, the connected devices including, but not limited to, a keypad, a display, a speaker, a microphone, a joystick, etc.

The processor 1100 is responsible for managing the bus architecture and general processing. The memory 1120 may store data used by the processor 1100 when performing operations.

Optionally, the processor 1100 may be a Central Processing Unit (CPU), an Application Specific Integrated Circuit (ASIC), a Field-Programmable Gate Array (FPGA), or a Complex Programmable Logic Device (CPLD). The processor may also employ a multi-core architecture.

The processor, by invoking computer programs stored in the memory, is configured to execute any method provided in the embodiments of the present disclosure according to obtained executable instructions. The processor and the memory may also be physically separated.

Optionally, the antenna configuration information includes or is associated with at least one of the following:
a set of deactivated antenna ports;
a set of activated antenna ports;
a first dimension and a second dimension of an antenna array;
indication information of an antenna panel;
channel state information CSI reporting indication information;
antenna port number information;
an antenna port pattern.

Optionally, the granularity of the set constituted by the antenna configuration information includes at least one of the following:
a single antenna port identifier;
information determined by a function of a single antenna port identifier;
a group of antenna ports.

Optionally, the antenna configuration information satisfies:
antenna array information determined according to the antenna configuration information belongs to a predefined set.

Optionally, the antenna array information includes or is associated with one of the following:
antenna port number information of an antenna array;
a first dimension and a second dimension of an antenna array;
indication information of an antenna panel;
an antenna port pattern.

Optionally, the predefined set satisfies at least one of the following:
the predefined set is associated with a predefined antenna port set;
the predefined set is associated with a first dimension and a second dimension of an antenna array corresponding to an antenna port;
the predefined set is associated with a first dimension and a second dimension of an antenna array corresponding to an antenna port and a number of antenna panels.

Optionally, the processor is configured to read the computer program in the memory and further perform the following operations:
obtain at least one reference signal resource configured by a network device through radio resource control RRC signaling, the reference signal resource being associated with at least one antenna configuration information;
receive antenna configuration indication sent by the network device through dynamic signaling;
determine the antenna configuration information indicated by the dynamic signaling according to the antenna configuration indication;
wherein the antenna configuration information indicated by the dynamic signaling is a subset of the at least one antenna configuration information associated with the at least one reference signal resource configured by the RRC signaling, the subset including at least one antenna configuration information;
wherein the reference signal resource includes: a periodic reference signal resource, a semi-persistent reference signal resource, or an aperiodic reference signal resource.

Optionally, in a case where the reference signal resource includes: a periodic reference signal resource, the processor is configured to read the computer program in the memory and further perform at least one of the following:
before the terminal receives the antenna configuration information sent by the network device through dynamic signaling, measure and report a preset reference signal resource;
in a case where the terminal receives the antenna configuration information sent by the network device through dynamic signaling, stop reporting the measurement report of the preset reference signal resource;
in a case where the terminal receives the antenna configuration information sent by the network device through dynamic signaling, report the measurement report indicated by the antenna configuration information;
in a case where the terminal receives the antenna configuration information sent by the network device through dynamic signaling, stop reporting the measurement report indicated by the antenna configuration information;
in a case where the terminal receives the antenna configuration information sent by the network device through dynamic signaling, reduce a reporting priority of a measurement report of a reference signal resource associated with a deactivated antenna port indicated by the antenna configuration information;
in a case where the terminal receives the antenna configuration information sent by the network device through dynamic signaling, stop reporting a measurement report of a reference signal resource associated with a deactivated antenna port indicated by the antenna configuration information;
wherein the preset reference signal resource includes: all periodic reference signal resources configured by the network device or a default periodic reference signal resource.

Optionally, the default periodic reference signal resource is specified by protocol or configured by higher layer signaling.

Optionally, the reference signal resource associated with the antenna configuration information is quasi co-located QCL with respect to type D.

Optionally, the processor is configured to read the computer program in the memory and perform the following operation:
measure M reference signal resources according to the antenna configuration information, and report N measurement reports;
wherein M and N are integers greater than or equal to 1, and M is greater than or equal to N.

Optionally, the processor is configured to read the computer program in the memory and further perform the following operations:
receive a set of measurement result feedback values configured by the network device through higher layer signaling;
perform reference signal resource measurement according to the antenna configuration information, and feedback a measurement report based on the set of measurement result feedback values;
   or,
obtain a plurality of sets of measurement result feedback values specified by protocol;
perform reference signal resource measurement according to the antenna configuration information, and based on the plurality of sets of measurement result feedback values, send to the network device a set identifier of the set of measurement result feedback values used for measurement reporting and a corresponding value within the set of measurement result feedback values for each measurement report;
   or,
obtain one set of measurement result feedback values specified by protocol, a minimum value of the set of measurement result feedback values being less than a preset value;
perform reference signal resource measurement according to the antenna configuration information, and feedback a measurement report based on the set of measurement result feedback values.

At least one embodiment of the present disclosure further provides a terminal, comprising a memory, a processor, and a computer program stored on the memory and executable on the processor. When the processor executes the program, it implements the processes in the information transmission method embodiments and achieves the same technical effects. To avoid repetition, these details are not reiterated here.

At least one embodiment of the present disclosure further provides a computer-readable storage medium, having a computer program stored thereon. When the program is executed by a processor, it implements the processes in the information transmission method embodiments described above and achieves the same technical effects. To avoid repetition, these details are not reiterated here. The computer-readable storage medium includes, for example, Read-Only Memory (ROM), Random Access Memory (RAM), magnetic disks, or optical discs.

As shown in FIG. 12, an embodiment of the present disclosure provides an information transmission apparatus 1200, applied to a network device, comprising:
a first sending unit 1201, configured to send antenna configuration information to a terminal, so that the terminal performs reference signal resource measurement reporting based on the acquired antenna configuration information.

Optionally, the antenna configuration information includes or is associated with at least one of the following:
a set of deactivated antenna ports;
a set of activated antenna ports;
a first dimension and a second dimension of an antenna array;
indication information of an antenna panel;
channel state information CSI reporting indication information;
antenna port number information;
an antenna port pattern.

Optionally, the granularity of the set constituted by the antenna configuration information includes at least one of the following:
a single antenna port identifier;
information determined by a function of a single antenna port identifier;
a group of antenna ports.

Optionally, the antenna configuration information satisfies:
antenna array information determined according to the antenna configuration information belongs to a predefined set.

Optionally, the antenna array information includes or is associated with one of the following:
antenna port number information of an antenna array;
a first dimension and a second dimension of an antenna array;
indication information of an antenna panel;
an antenna port pattern.

Optionally, the predefined set satisfies at least one of the following:
the predefined set is associated with a predefined antenna port set;
the predefined set is associated with a first dimension and a second dimension of an antenna array corresponding to an antenna port;
the predefined set is associated with a first dimension and a second dimension of an antenna array corresponding to an antenna port and a number of antenna panels.

Optionally, the apparatus further comprises:
a second sending unit, configured to configure at least one reference signal resource for the terminal through radio resource control RRC signaling, the reference signal resource being associated with at least one antenna configuration information;
the first sending unit 1201 is configured to:
   send an antenna configuration indication to the terminal through dynamic signaling, so that the terminal determines the antenna configuration information indicated by the dynamic signaling based on the antenna configuration indication;
   wherein the antenna configuration information indicated by the dynamic signaling is a subset of the at least one antenna configuration information associated with the at least one reference signal resource configured by the RRC signaling, the subset including at least one antenna configuration information;
   the reference signal resource includes: a periodic reference signal resource, a semi-persistent reference signal resource, or an aperiodic reference signal resource.

Optionally, the reference signal resource associated with the antenna configuration information is quasi co-located (QCL) with respect to type D.

Optionally, the apparatus further comprises:
a third sending unit, configured to configure a set of measurement result feedback values for the terminal through higher layer signaling.

Optionally, the apparatus further comprises:
a second receiving unit, configured to receive a set identifier of the set of measurement result feedback values used by the terminal and a corresponding value within the set of measurement result feedback values for each measurement report reported by the terminal.

It should be noted that the division of units in the embodiments of the present disclosure is illustrative and is merely a logical functional division. In actual implementation, there may be other division methods. Additionally, the functional units in various embodiments of the present disclosure may be integrated into one processing unit, or each unit may exist physically alone, or two or more units may be integrated into one unit. The above-mentioned integrated units may be implemented in the form of hardware or software functional units.

If the integrated unit is implemented in the form of a software functional unit and sold or used as an independent product, it may be stored in a processor-readable storage medium. Based on such understanding, the technical solution of the present disclosure, in essence, or the part contributing to the related art, or all or part of the technical solution, may be embodied in the form of a software product. The computer software product is stored in a storage medium and includes instructions for causing a computer device (which may be a personal computer, server, network device, etc.) or processor to execute all or part of the steps of the methods described in the various embodiments of the present disclosure. The aforementioned storage medium includes various media that can store program code, such as USB flash drives, removable hard disks, Read-Only Memory (ROM), Random Access Memory (RAM), magnetic disks, or optical discs.

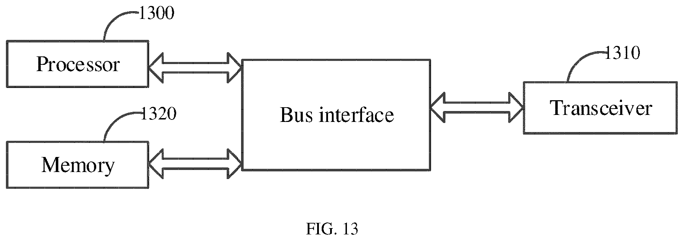

As shown in FIG. 13, an embodiment of the present disclosure further provides a network device, comprising a processor 1300, a transceiver 1310, a memory 1320, and a program stored on the memory 1320 and executable on the processor 1300. The transceiver 1310 is connected to the processor 1300 and the memory 1320 via a bus interface. The processor 1300 is configured to read the program in the memory and execute the following process:
send antenna configuration information to a terminal, so that the terminal performs reference signal resource measurement reporting based on the acquired antenna configuration information.

The transceiver 1310 is configured to receive and transmit data under the control of the processor 1300.

In FIG. 13, the bus architecture may include any number of interconnected buses and bridges, specifically linking together various circuits represented by one or more processors exemplified by the processor 1300 and a memory represented by the memory 1320. The bus architecture may also link together various other circuits, such as peripheral devices, voltage regulators, and power management circuits, all of which are well-known in the art. Therefore, they will not be further described herein. The bus interface provides an interface. The transceiver 1310 may comprise multiple elements, including a transmitter and a receiver, providing units for communicating with various other devices over transmission media. These transmission media include wireless channels, wired channels, optical cables, and other transmission media.

The processor 1300 is responsible for managing the bus architecture and general processing. The memory 1320 may store data used by the processor 1300 when performing operations.

Optionally, the processor 1300 may be a CPU, ASIC, FPGA, or CPLD. The processor may also employ a multi-core architecture.

The processor, by invoking the computer program stored in the memory, is configured to execute any method provided by the embodiments of the present disclosure according to the obtained executable instructions. The processor and the memory may also be physically separate.

Optionally, the antenna configuration information includes or is associated with at least one of the following:
a set of deactivated antenna ports;
a set of activated antenna ports;
a first dimension and a second dimension of an antenna array;
indication information of an antenna panel;
channel state information CSI reporting indication information;
antenna port number information;
an antenna port pattern.

Optionally, the granularity of the set constituted by the antenna configuration information includes at least one of the following:
a single antenna port identifier;
information determined by a function of a single antenna port identifier;
a group of antenna ports.

Optionally, the antenna configuration information satisfies:
antenna array information determined according to the antenna configuration information belongs to a predefined set.

Optionally, the antenna array information includes or is associated with one of the following:
antenna port number information of an antenna array;
a first dimension and a second dimension of an antenna array;
indication information of an antenna panel;
an antenna port pattern.

Optionally, the predefined set satisfies at least one of the following:
the predefined set is associated with a predefined antenna port set;
the predefined set is associated with a first dimension and a second dimension of an antenna array corresponding to an antenna port;
the predefined set is associated with a first dimension and a second dimension of an antenna array corresponding to an antenna port and a number of antenna panels.

Optionally, the processor is configured to read the computer program in the memory and further execute the following operation:
Configure at least one reference signal resource for the terminal through radio resource control RRC signaling, the reference signal resource being associated with at least one antenna configuration information;
The operation of sending antenna configuration information to the terminal includes:
   Sending an antenna configuration indication to the terminal through dynamic signaling, so that the terminal determines the antenna configuration information indicated by the dynamic signaling based on the antenna configuration indication;
   Wherein the antenna configuration information indicated by the dynamic signaling is a subset of the at least one antenna configuration information associated with the at least one reference signal resource configured by the RRC signaling, the subset including at least one antenna configuration information;
   The reference signal resource includes: a periodic reference signal resource, a semi-persistent reference signal resource, or an aperiodic reference signal resource.

Optionally, the reference signal resource associated with the antenna configuration information is quasi co-located (QCL) with respect to type D.

Optionally, the processor is configured to read the computer program in the memory and further execute the following operation:
configure a set of measurement result feedback values for the terminal through higher layer signaling.

Optionally, the processor is configured to read the computer program in the memory and further execute the following operation:
receive a set identifier of the set of measurement result feedback values used by the terminal and a corresponding value within the set of measurement result feedback values for each measurement report reported by the terminal.

At least one embodiment of the present disclosure further provides a network device, comprising a memory, a processor, and a computer program stored on the memory and executable by the processor. When the processor executes the program, it implements the processes described in the embodiments of the information transmission method and achieves the same technical effects. To avoid repetition, details are not reiterated here.

At least one embodiment of the present disclosure further provides a computer-readable storage medium storing a computer program. When the program is executed by a processor, it implements the processes described in the embodiments of the information transmission method and achieves the same technical effects. To avoid repetition, details are not reiterated here. The computer-readable storage medium may include, but is not limited to, Read-Only Memory (ROM), Random Access Memory (RAM), magnetic disks, or optical disks.

Those skilled in the art should understand that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product implemented on one or more computer-usable storage media (including but not limited to disk storage, optical storage, etc.) containing computer-usable program code.

The present disclosure is described with reference to flowcharts and/or block diagrams of methods, devices (systems), and computer program products according to the embodiments of the present disclosure. It should be understood that each process and/or block in the flowcharts and/or block diagrams, as well as combinations thereof, may be implemented by computer-executable instructions. These computer-executable instructions may be provided to a processor of a general-purpose computer, a special-purpose computer, an embedded processor, or other programmable data processing device to produce a machine, such that the instructions executed by the processor of the computer or other programmable data processing device generate means for implementing the functions specified in one or more processes of the flowchart and/or one or more blocks of the block diagram.

These processor-executable instructions may also be stored in a processor-readable memory capable of directing a computer or other programmable data processing device to operate in a specific manner, such that the instructions stored in the processor-readable memory produce an article of manufacture including instruction means that implement the functions specified in one or more processes of the flowchart and/or one or more blocks of the block diagram.

These processor-executable instructions may also be loaded onto a computer or other programmable data processing device to cause a series of operational steps to be performed on the computer or other programmable device, thereby generating computer-implemented processing. The instructions executed on the computer or other programmable device provide steps for implementing the functions specified in one or more processes of the flowchart and/or one or more blocks of the block diagram.

It should be noted that the division of the above units is merely a division of logical functions, and in actual implementation, they may be fully or partially integrated into a single physical entity or physically separated. These units may be implemented entirely in software by processing elements, entirely in hardware, or partially in software and partially in hardware. For example, a determining unit may be a separately established processing element or integrated into a chip of the above device. Alternatively, it may be stored in the memory of the above device in the form of program code and executed by a processing element of the device to perform the functions of the determining unit. The implementation of other units is similar. Additionally, these units may be fully or partially integrated or implemented independently. The processing element mentioned herein may be an integrated circuit capable of signal processing. In implementation, each step of the above method or each unit may be completed by integrated logic circuits in the processing element or by instructions in the form of software.

For example, each module, unit, sub-unit, or sub-module may be one or more integrated circuits configured to implement the above method, such as one or more Application-Specific Integrated Circuits (ASICs), one or more Digital Signal Processors (DSPs), one or more Field Programmable Gate Arrays (FPGAs), etc. Alternatively, when a unit is implemented by a processing element executing program code, the processing element may be a general-purpose processor, such as a Central Processing Unit (CPU) or another processor capable of executing program code. Furthermore, these units may be integrated and implemented as a System-on-a-Chip (SoC).

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. An information transmission method, performed by a terminal, the method comprising:
acquiring antenna configuration information sent by a network device;
performing reference signal resource measurement reporting according to the antenna configuration information.

2. The method according to claim 1, wherein the antenna configuration information comprises or is associated with at least one of:
a set of deactivated antenna ports;
a set of activated antenna ports;
a first dimension and a second dimension of an antenna array;
indication information of an antenna panel;
channel state information (CSI) report indication information;
antenna port number information;
an antenna port pattern.

3. The method according to claim 1 or 2, wherein a granularity of a set constituted by the antenna configuration information comprises at least one of:
a single antenna port identifier;
information determined by a function of a single antenna port identifier;
a group of antenna ports.

4. The method according to claim 1, wherein the antenna configuration information satisfies:
antenna array information determined according to the antenna configuration information belongs to a predefined set.

5. The method according to claim 4, wherein the antenna array information comprises or is associated with one of:
antenna port number information of the antenna array;
a first dimension and a second dimension of the antenna array;
indication information of an antenna panel;
an antenna port pattern.

6. The method according to claim 4, wherein the predefined set satisfies at least one of:
the predefined set is associated with a predefined antenna port set;
the predefined set is associated with a first dimension and a second dimension of an antenna array corresponding to an antenna port;
the predefined set is associated with a first dimension and a second dimension of an antenna array corresponding to an antenna port and a number of antenna panels.

7. The method according to claim 1, wherein before the acquiring antenna configuration information sent by a network device, the method further comprises:
acquiring at least one reference signal resource configured by the network device via radio resource control (RRC) signaling, wherein the reference signal resource is associated with at least one antenna configuration information;
wherein the acquiring antenna configuration information sent by the network device comprises:
receiving antenna configuration indication sent by the network device via dynamic signaling;
determining antenna configuration information indicated by the dynamic signaling according to the antenna configuration indication;
wherein the antenna configuration information indicated by the dynamic signaling is a subset of the at least one antenna configuration information associated with the at least one reference signal resource configured by the RRC signaling, and the subset comprises at least one antenna configuration information;
wherein the reference signal resource comprises: a periodic reference signal resource, a semi-persistent reference signal resource, or an aperiodic reference signal resource.

8. The method according to claim 7, wherein in a case that the reference signal resource comprises a periodic reference signal resource, the method further comprises at least one of:
performing measurement reporting on a preset reference signal resource before the terminal receives antenna configuration information sent by the network device via dynamic signaling;
stopping reporting a measurement report of a preset reference signal resource in a case that the terminal receives antenna configuration information sent by the network device via dynamic signaling;
reporting a measurement report indicated by the antenna configuration information in a case that the terminal receives antenna configuration information sent by the network device via dynamic signaling;
stopping reporting a measurement report indicated by the antenna configuration information in a case that the terminal receives antenna configuration information sent by the network device via dynamic signaling;
reducing a reporting priority of a measurement report for a reference signal resource associated with a deactivated antenna port indicated by the antenna configuration information in a case that the terminal receives antenna configuration information sent by the network device via dynamic signaling;
stopping reporting a measurement report for a reference signal resource associated with a deactivated antenna port indicated by the antenna configuration information in a case that the terminal receives antenna configuration information sent by the network device via dynamic signaling;
wherein the preset reference signal resource comprises: all periodic reference signal resources configured by the network device or a default periodic reference signal resource.

9. The method according to claim 8, wherein the default periodic reference signal resource is protocol-specified or configured by higher layer signaling.

10. The method according to claim 1, wherein the reference signal resource associated with the antenna configuration information is quasi co-located (QCL) with respect to typeD.

11. The method according to claim 1, wherein the performing reference signal resource measurement reporting according to the antenna configuration information comprises:
performing measurement on M reference signal resources according to the antenna configuration information, and reporting N measurement reports;
wherein M and N are integers greater than or equal to 1, and M is greater than or equal to N.

12. The method according to claim 1, wherein before the performing reference signal resource measurement reporting according to the antenna configuration information, the method further comprises:
receiving a set of measurement result feedback values configured by the network device via higher layer signaling;
wherein the performing reference signal resource measurement reporting according to the antenna configuration information comprises:
performing reference signal resource measurement according to the antenna configuration information, and feeding back a measurement report based on the set of measurement result feedback values;
or,
before the performing reference signal resource measurement reporting according to the antenna configuration information, the method further comprises:
acquiring a plurality of protocol-specified sets of measurement result feedback values;
wherein the performing reference signal resource measurement reporting according to the antenna configuration information comprises:
performing reference signal resource measurement according to the antenna configuration information, and sending, to the network device, a set identifier of the set of measurement result feedback values used for the measurement reporting and a corresponding value of each measurement report within the set of measurement result feedback values, based on the plurality of sets of measurement result feedback values;
or,
the performing reference signal resource measurement reporting according to the antenna configuration information comprises:
acquiring a protocol-specified set of measurement result feedback values, wherein a minimum value of the set of measurement result feedback values is less than a preset value;
performing reference signal resource measurement according to the antenna configuration information, and feeding back a measurement report based on the set of measurement result feedback values.

13. An information transmission method, performed by a network device, the method comprising:
sending antenna configuration information to a terminal, to cause the terminal to perform reference signal resource measurement reporting based on the acquired antenna configuration information.

14. The method according to claim 13, wherein the antenna configuration information comprises or is associated with at least one of:
a set of deactivated antenna ports;
a set of activated antenna ports;
a first dimension and a second dimension of an antenna array;
indication information of an antenna panel;
channel state information (CSI) report indication information;
antenna port number information;
an antenna port pattern.

15. The method according to claim 13 or 14, wherein a granularity of a set constituted by the antenna configuration information comprises at least one of:
a single antenna port identifier;
information determined by a function of a single antenna port identifier;
a group of antenna ports.

16. The method according to claim 13, wherein the antenna configuration information satisfies:
antenna array information determined according to the antenna configuration information belongs to a predefined set.

17. The method according to claim 16, wherein the antenna array information comprises or is associated with one of:
antenna port number information of the antenna array;
a first dimension and a second dimension of the antenna array;
indication information of an antenna panel;
an antenna port pattern.

18. The method according to claim 16, wherein the predefined set satisfies at least one of:
the predefined set is associated with a predefined antenna port set;
the predefined set is associated with a first dimension and a second dimension of an antenna array corresponding to an antenna port;
the predefined set is associated with a first dimension and a second dimension of an antenna array corresponding to an antenna port and a number of antenna panels.

19. The method according to claim 13, further comprising:
configuring at least one reference signal resource for the terminal via radio resource control (RRC) signaling, wherein the reference signal resource is associated with at least one antenna configuration information;
wherein the sending antenna configuration information to the terminal comprises:
sending an antenna configuration indication to the terminal via dynamic signaling, to cause the terminal to determine antenna configuration information indicated by the dynamic signaling based on the antenna configuration indication;
wherein the antenna configuration information indicated by the dynamic signaling is a subset of the at least one antenna configuration information associated with the at least one reference signal resource configured by the RRC signaling, and the subset comprises at least one antenna configuration information;
wherein the reference signal resource comprises: a periodic reference signal resource, a semi-persistent reference signal resource, or an aperiodic reference signal resource.

20. The method according to claim 13, wherein the reference signal resource associated with the antenna configuration information is quasi co-located (QCL) with respect to type D.

21. The method according to claim 13, further comprising:
configuring a set of measurement result feedback values for the terminal via higher layer signaling.

22. The method according to claim 13, further comprising:
receiving, from the terminal, a set identifier of a set of measurement result feedback values used by the terminal and a corresponding value of each measurement report within the set of measurement result feedback values.

23. A terminal, comprising a memory, a transceiver, and a processor:
the memory is configured to store a computer program;
the transceiver is configured to transmit and receive data under control of the processor;
the processor is configured to read the computer program in the memory and perform the following operations:
acquire antenna configuration information sent by a network device;
perform reference signal resource measurement reporting according to the antenna configuration information.

24. The terminal according to claim 23, wherein the antenna configuration information comprises or is associated with at least one of:
a set of deactivated antenna ports;
a set of activated antenna ports;
a first dimension and a second dimension of an antenna array;
indication information of an antenna panel;
channel state information (CSI) report indication information;
antenna port number information;
an antenna port pattern.

25. The terminal according to claim 23 or 24, wherein a granularity of a set constituted by the antenna configuration information comprises at least one of:
a single antenna port identifier;
information determined by a function of a single antenna port identifier;
a group of antenna ports.

26. The terminal according to claim 23, wherein the antenna configuration information satisfies:
antenna array information determined according to the antenna configuration information belongs to a predefined set.

27. The terminal according to claim 26, wherein the antenna array information comprises or is associated with one of:
antenna port number information of the antenna array;
a first dimension and a second dimension of the antenna array;
indication information of an antenna panel;
an antenna port pattern.

28. The terminal according to claim 26, wherein the predefined set satisfies at least one of:
the predefined set is associated with a predefined antenna port set;
the predefined set is associated with a first dimension and a second dimension of an antenna array corresponding to an antenna port;
the predefined set is associated with a first dimension and a second dimension of an antenna array corresponding to an antenna port and a number of antenna panels.

29. The terminal according to claim 23, wherein the processor is further configured to read the computer program in the memory and perform the following operations:
acquire at least one reference signal resource configured by the network device via radio resource control (RRC) signaling, wherein the reference signal resource is associated with at least one antenna configuration information;
receive an antenna configuration indication sent by the network device via dynamic signaling;
determine antenna configuration information indicated by the dynamic signaling according to the antenna configuration indication;
wherein the antenna configuration information indicated by the dynamic signaling is a subset of the at least one antenna configuration information associated with the at least one reference signal resource configured by the RRC signaling, and the subset comprises at least one antenna configuration information;
wherein the reference signal resource comprises: a periodic reference signal resource, a semi-persistent reference signal resource, or an aperiodic reference signal resource.

30. The terminal according to claim 29, wherein in a case that the reference signal resource comprises a periodic reference signal resource, the processor is further configured to read the computer program in the memory and perform at least one of the following operations:
perform measurement reporting on a preset reference signal resource before the terminal receives antenna configuration information sent by the network device via dynamic signaling;
stop reporting a measurement report of a preset reference signal resource in a case that the terminal receives antenna configuration information sent by the network device via dynamic signaling;
report a measurement report indicated by the antenna configuration information in a case that the terminal receives antenna configuration information sent by the network device via dynamic signaling;
stop reporting a measurement report indicated by the antenna configuration information in a case that the terminal receives antenna configuration information sent by the network device via dynamic signaling;
reduce a reporting priority of a measurement report for a reference signal resource associated with a deactivated antenna port indicated by the antenna configuration information in a case that the terminal receives antenna configuration information sent by the network device via dynamic signaling;
stop reporting a measurement report for a reference signal resource associated with a deactivated antenna port indicated by the antenna configuration information in a case that the terminal receives antenna configuration information sent by the network device via dynamic signaling;
wherein the preset reference signal resource comprises: all periodic reference signal resources configured by the network device or a default periodic reference signal resource.

31. The terminal according to claim 30, wherein the default periodic reference signal resource is protocol-specified or configured by higher layer signaling.

32. The terminal according to claim 23, wherein the reference signal resource associated with the antenna configuration information is quasi co-located (QCL) with respect to typeD.

33. The terminal according to claim 23, wherein the processor is configured to read the computer program in the memory and perform the following operation:
perform measurement on M reference signal resources according to the antenna configuration information, and report N measurement reports;
wherein M and N are integers greater than or equal to 1, and M is greater than or equal to N.

34. The terminal according to claim 23, wherein the processor is further configured to read the computer program in the memory and perform the following operations:
receive a set of measurement result feedback values configured by the network device via higher layer signaling;
perform reference signal resource measurement according to the antenna configuration information, and feed back a measurement report based on the set of measurement result feedback values;
or,
acquire a plurality of protocol-specified sets of measurement result feedback values;
perform reference signal resource measurement according to the antenna configuration information, and send, to the network device, a set identifier of the set of measurement result feedback values used for the measurement reporting and a corresponding value of each measurement report within the set of measurement result feedback values, based on the plurality of sets of measurement result feedback values;
or,
acquire a protocol-specified set of measurement result feedback values, wherein a minimum value of the set of measurement result feedback values is less than a preset value;
perform reference signal resource measurement according to the antenna configuration information, and feed back a measurement report based on the set of measurement result feedback values.

35. A network device, comprising a memory, a transceiver, and a processor:
the memory is configured to store a computer program;
the transceiver is configured to transmit and receive data under control of the processor;
the processor is configured to read the computer program in the memory and perform the following operation:
send antenna configuration information to a terminal, to cause the terminal to perform reference signal resource measurement reporting based on the acquired antenna configuration information.

36. The network device according to claim 35, wherein the antenna configuration information comprises or is associated with at least one of:
a set of deactivated antenna ports;
a set of activated antenna ports;
a first dimension and a second dimension of an antenna array;
indication information of an antenna panel;
channel state information (CSI) report indication information;
antenna port number information;
an antenna port pattern.

37. The network device according to claim 35 or 36, wherein a granularity of a set constituted by the antenna configuration information comprises at least one of:
a single antenna port identifier;
information determined by a function of a single antenna port identifier;
a group of antenna ports.

38. The network device according to claim 35, wherein the antenna configuration information satisfies:
antenna array information determined according to the antenna configuration information belongs to a predefined set.

39. The network device according to claim 38, wherein the antenna array information comprises or is associated with one of:
antenna port number information of the antenna array;
a first dimension and a second dimension of the antenna array;
indication information of an antenna panel;
an antenna port pattern.

40. The network device according to claim 38, wherein the predefined set satisfies at least one of:
the predefined set is associated with a predefined antenna port set;
the predefined set is associated with a first dimension and a second dimension of an antenna array corresponding to an antenna port;
the predefined set is associated with a first dimension and a second dimension of an antenna array corresponding to an antenna port and a number of antenna panels.

41. The network device according to claim 35, wherein the processor is further configured to read the computer program in the memory and perform the following operations:
configure at least one reference signal resource for the terminal via radio resource control (RRC) signaling, wherein the reference signal resource is associated with at least one antenna configuration information;
send an antenna configuration indication to the terminal via dynamic signaling, to cause the terminal to determine antenna configuration information indicated by the dynamic signaling based on the antenna configuration indication;
wherein the antenna configuration information indicated by the dynamic signaling is a subset of the at least one antenna configuration information associated with the at least one reference signal resource configured by the RRC signaling, and the subset comprises at least one antenna configuration information;
wherein the reference signal resource comprises: a periodic reference signal resource, a semi-persistent reference signal resource, or an aperiodic reference signal resource.

42. The network device according to claim 35, wherein the reference signal resource associated with the antenna configuration information is quasi co-located (QCL) with respect to typeD.

43. The network device according to claim 35, wherein the processor is further configured to read the computer program in the memory and perform the following operation:
configure a set of measurement result feedback values for the terminal via higher layer signaling.

44. The network device according to claim 35, wherein the processor is further configured to read the computer program in the memory and perform the following operation:
receive, from the terminal, a set identifier of a set of measurement result feedback values used by the terminal and a corresponding value of each measurement report within the set of measurement result feedback values.

45. An information transmission apparatus, applied to a terminal, the apparatus comprising:
a first acquisition unit configured to acquire antenna configuration information sent by a network device;
a measurement reporting unit configured to perform reference signal resource measurement reporting according to the antenna configuration information.

46. The apparatus according to claim 45, wherein the antenna configuration information comprises or is associated with at least one of:
a set of deactivated antenna ports;
a set of activated antenna ports;
a first dimension and a second dimension of an antenna array;
indication information of an antenna panel;
channel state information (CSI) report indication information;
antenna port number information;
an antenna port pattern.

47. The apparatus according to claim 45 or 46, wherein a granularity of a set constituted by the antenna configuration information comprises at least one of:
a single antenna port identifier;
information determined by a function of a single antenna port identifier;
a group of antenna ports.

48. The apparatus according to claim 45, wherein the antenna configuration information satisfies:
antenna array information determined according to the antenna configuration information belongs to a predefined set.

49. The apparatus according to claim 48, wherein the antenna array information comprises or is associated with one of:
antenna port number information of the antenna array;
a first dimension and a second dimension of the antenna array;
indication information of an antenna panel;
an antenna port pattern.

50. The apparatus according to claim 48, wherein the predefined set satisfies at least one of:
the predefined set is associated with a predefined antenna port set;
the predefined set is associated with a first dimension and a second dimension of an antenna array corresponding to an antenna port;
the predefined set is associated with a first dimension and a second dimension of an antenna array corresponding to an antenna port and a number of antenna panels.

51. The apparatus according to claim 45, further comprising:
a second acquisition unit configured to acquire at least one reference signal resource configured by the network device via radio resource control (RRC) signaling, wherein the reference signal resource is associated with at least one antenna configuration information;
wherein the first acquisition unit is configured to:
receive an antenna configuration indication sent by the network device via dynamic signaling;
determine antenna configuration information indicated by the dynamic signaling according to the antenna configuration indication;
wherein the antenna configuration information indicated by the dynamic signaling is a subset of the at least one antenna configuration information associated with the at least one reference signal resource configured by the RRC signaling, and the subset comprises at least one antenna configuration information;
wherein the reference signal resource comprises: a periodic reference signal resource, a semi-persistent reference signal resource, or an aperiodic reference signal resource.

52. The apparatus according to claim 51, further comprising at least one of:
a first execution unit configured to perform measurement reporting on a preset reference signal resource before the terminal receives antenna configuration information sent by the network device via dynamic signaling;
a second execution unit configured to stop reporting a measurement report of a preset reference signal resource in a case that the terminal receives antenna configuration information sent by the network device via dynamic signaling;
a third execution unit configured to report a measurement report indicated by the antenna configuration information in a case that the terminal receives antenna configuration information sent by the network device via dynamic signaling;
a fourth execution unit configured to stop reporting a measurement report indicated by the antenna configuration information in a case that the terminal receives antenna configuration information sent by the network device via dynamic signaling;
a fifth execution unit configured to reduce a reporting priority of a measurement report for a reference signal resource associated with a deactivated antenna port indicated by the antenna configuration information in a case that the terminal receives antenna configuration information sent by the network device via dynamic signaling;
a sixth execution unit configured to stop reporting a measurement report for a reference signal resource associated with a deactivated antenna port indicated by the antenna configuration information in a case that the terminal receives antenna configuration information sent by the network device via dynamic signaling;
wherein the preset reference signal resource comprises: all periodic reference signal resources configured by the network device or a default periodic reference signal resource.

53. The apparatus according to claim 52, wherein the default periodic reference signal resource is protocol-specified or configured by higher layer signaling.

54. The apparatus according to claim 45, wherein the reference signal resource associated with the antenna configuration information is quasi co-located (QCL) with respect to typeD.

55. The apparatus according to claim 45, wherein the measurement reporting unit is configured to:
perform measurement on M reference signal resources according to the antenna configuration information, and report N measurement reports;
wherein M and N are integers greater than or equal to 1, and M is greater than or equal to N.

56. The apparatus according to claim 45, further comprising:
a first reception unit configured to receive a set of measurement result feedback values configured by the network device via higher layer signaling;
wherein the measurement reporting unit is configured to:
perform reference signal resource measurement according to the antenna configuration information, and feed back a measurement report based on the set of measurement result feedback values;
or,
the apparatus further comprises:
a third acquisition unit configured to acquire a plurality of protocol-specified sets of measurement result feedback values;
wherein the measurement reporting unit is configured to:
perform reference signal resource measurement according to the antenna configuration information, and send, to the network device, a set identifier of the set of measurement result feedback values used for the measurement reporting and a corresponding value of each measurement report within the set of measurement result feedback values, based on the plurality of sets of measurement result feedback values;
or,
wherein the measurement reporting unit is configured to:
acquire a protocol-specified set of measurement result feedback values, wherein a minimum value of the set of measurement result feedback values is less than a preset value;
perform reference signal resource measurement according to the antenna configuration information, and feed back a measurement report based on the set of measurement result feedback values.

57. An information transmission apparatus, applied to a network device, the apparatus comprising:
a first sending unit configured to send antenna configuration information to a terminal, so that the terminal performs reference signal resource measurement reporting based on the acquired antenna configuration information.

58. The apparatus according to claim 57, wherein the antenna configuration information comprises or is associated with at least one of:
a set of deactivated antenna ports;
a set of activated antenna ports;
a first dimension and a second dimension of an antenna array;
indication information of an antenna panel;
channel state information (CSI) report indication information;
antenna port number information;
an antenna port pattern.

59. The apparatus according to claim 57 or 58, wherein a granularity of a set constituted by the antenna configuration information comprises at least one of:
a single antenna port identifier;
information determined by a function of a single antenna port identifier;
a group of antenna ports.

60. The apparatus according to claim 57, wherein the antenna configuration information satisfies:
antenna array information determined according to the antenna configuration information belongs to a predefined set.

61. The apparatus according to claim 60, wherein the antenna array information comprises or is associated with one of:
antenna port number information of the antenna array;
a first dimension and a second dimension of the antenna array;
indication information of an antenna panel;
an antenna port pattern.

62. The apparatus according to claim 60, wherein the predefined set satisfies at least one of:
the predefined set is associated with a predefined antenna port set;
the predefined set is associated with a first dimension and a second dimension of an antenna array corresponding to an antenna port;
the predefined set is associated with a first dimension and a second dimension of an antenna array corresponding to an antenna port and a number of antenna panels.

63. The apparatus according to claim 57, further comprising:
a second sending unit configured to configure at least one reference signal resource for the terminal via radio resource control (RRC) signaling, wherein the reference signal resource is associated with at least one antenna configuration information;
wherein the first sending unit is configured to:
send an antenna configuration indication to the terminal via dynamic signaling, so that the terminal determines antenna configuration information indicated by the dynamic signaling based on the antenna configuration indication;
wherein the antenna configuration information indicated by the dynamic signaling is a subset of the at least one antenna configuration information associated with the at least one reference signal resource configured by the RRC signaling, and the subset comprises at least one antenna configuration information;
wherein the reference signal resource comprises: a periodic reference signal resource, a semi-persistent reference signal resource, or an aperiodic reference signal resource.

64. The apparatus according to claim 57, wherein the reference signal resource associated with the antenna configuration information is quasi co-located (QCL) with respect to typeD.

65. The apparatus according to claim 57, further comprising:
a third sending unit configured to configure a set of measurement result feedback values for the terminal via higher layer signaling.

66. The apparatus according to claim 57, further comprising:
a second reception unit configured to receive a set identifier of a set of measurement result feedback values used by the terminal and a corresponding value of each measurement report within the set of measurement result feedback values, reported by the terminal.

67. A processor-readable storage medium, storing a computer program, wherein the computer program is configured to cause the processor to execute the method according to any one of claims 1 to 22.
